(19) **Europäisches Patentamt**
**European Patent Office**
**Office européen des brevets**

(11) **EP 3 982 082 B1**

(12) **FASCICULE DE BREVET EUROPEEN**

(45) Date de publication et mention de la délivrance du brevet:
**10.07.2024 Bulletin 2024/28**

(21) Numéro de dépôt: **21202079.6**

(22) Date de dépôt: **12.10.2021**

(51) Classification Internationale des Brevets (IPC):
**G01C 19/5719** (2012.01)  **G01P 15/125** (2006.01)
**B81B 7/02** (2006.01)  **H01G 5/04** (2006.01)

(52) Classification Coopérative des Brevets (CPC):
**G01C 19/5719; G01P 15/125; H01G 5/14; H01G 5/145;** H01G 5/04

(54) **DISPOSITIF DE CONDENSATEUR À SURFACE VARIABLE, ACCÉLÉROMÈTRE ET GYROMÈTRE MICROMÉCANIQUES COMPRENANT UN TEL DISPOSITIF**

KONDENSATORVORRICHTUNG MIT VARIABLER OBERFLÄCHE, MIKROMECHANISCHER BESCHLEUNIGUNGSMESSER UND MESSKREISEL MIT EINER SOLCHEN VORRICHTUNG

DEVICE FOR CAPACITOR WITH VARIABLE SURFACE, MICROMECHANICAL ACCELEROMETER AND GYROMETER COMPRISING SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.10.2020 FR 2010405**

(43) Date de publication de la demande:
**13.04.2022 Bulletin 2022/15**

(73) Titulaire: **Commissariat à l'Energie Atomique et aux Energies Alternatives**
**75015 Paris (FR)**

(72) Inventeurs:
• **JOURDAN, Guillaume**
**38054 GRENOBLE CEDEX 09 (FR)**
• **JANIOUD, Pierre**
**38054 GRENOBLE CEDEX 09 (FR)**

(74) Mandataire: **Cabinet Camus Lebkiri**
**25 rue de Maubeuge**
**75009 Paris (FR)**

(56) Documents cités:
**WO-A1-2009/120193  CN-A- 101 813 480
CN-A- 101 819 215  US-A1- 2012 293 907
US-A1- 2013 093 437**

**Description**

**DOMAINE TECHNIQUE**

Le domaine technique de l'invention est celui des microsystèmes électromécaniques, ou MEMS (pour « MicroElectroMechanical Systems», en anglais). L'invention concerne en particulier un dispositif de condensateur à surface variable pour un système de type MEMS, par exemple un gyromètre ou un accéléromètre de type MEMS.

**ARRIERE-PLAN TECHNOLOGIQUE**

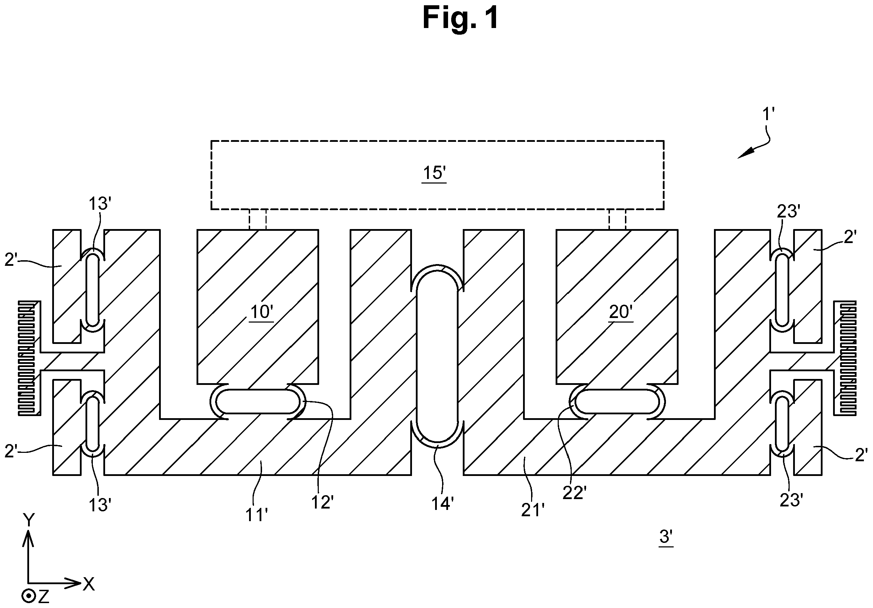

Des gyromètres réalisés sous la forme de microsystèmes électromécaniques ont été développés ces dernières années, par exemple sous la forme représentée schématiquement sur la figure 1.

Le gyromètre 1' de la figure 1 comprend deux masses d'épreuves 1 0' et 20', supportées respectivement par deux cadres mobiles 11' et 21'. Chaque masse d'épreuve 10', 20' est liée au cadre correspondant, 11', 21', par un ressort 12', 22' autorisant un déplacement de la masse, par rapport au cadre, selon une direction Y, appelée direction de détection. Quant aux cadres 11' et 21', ils sont liés chacun à un support 2' du gyromètre par un ressort 13', 23' qui autorise un déplacement du cadre par rapport au support 2', selon une direction d'excitation X. Les deux cadres sont aussi liés l'un à l'autre par un ressort central 14', qui autorise un mouvement relatif d'un cadre par rapport à l'autre selon la direction d'excitation X. Le support 2' est solidaire du substrat 3' sur lequel est réalisé le gyromètre.

Lorsque le gyromètre 1' est en fonctionnement, on fait osciller les cadres mobiles 11' et 21' autour de leurs positions d'équilibres respectives, parallèlement à la direction X. Une rotation du gyromètre autour d'un axe Z, perpendiculaire aux directions d'excitation et de détection X et Y, entraîne alors un déplacement de chaque masse d'épreuve 10', 20' selon la direction de détection Y (sous l'effet de la force de Coriolis subie par la masse d'épreuve), déplacement qui est détecté par un système de capteurs 15'.

Pour rendre le gyromètre 1' aussi insensible que possible aux vibrations mécaniques, on cherche en général à exciter les cadres mobiles en opposition de phase, de manière antisymétrique (c'est-à-dire de manière à ce que les vitesses respectives des deux cadres, par rapport au support 2', soient opposées l'une à l'autre). Pour permettre une telle oscillation antisymétrique, il est souhaitable que la fréquence de résonance du premier cadre 11' (c'est-à-dire sa fréquence d'oscillation propre, selon la direction d'excitation) soit égale à la fréquence de résonance du deuxième cadre 12'. Or il est difficile en pratique, à la construction, d'obtenir des raideurs strictement identiques pour les deux ressorts 13' et 23'. Il serait donc souhaitable de pouvoir ajuster, après fabrication, les raideurs des forces de rappel subies par les cadres mobiles 11' et 21' (pour pouvoir corriger une éventuelle différence de raideur entre les deux ressorts 13' et 23').

Plus généralement, dans le domaine des MEMS, il est intéressant de pouvoir ajuster après fabrication, de manière électrique, la raideur d'une force de rappel élastique exercée sur une masse mobile ou un autre type d'élément.

Dans ce contexte, on connait du document US 8,971,012 un système de condensateur à surface variable comprenant (figures 2 et 3) :

- une première électrode 16' ayant une première surface libre, S1', rectangulaire, la première électrode étant solidaire d'une masse, mobile par rapport à un support, et

- une deuxième électrode 17' ayant une deuxième surface libre, S2', délimitée par une bordure en dents de scie 18', la première électrode étant fixe par rapport au support.

Les première et deuxième surfaces S1' et S2' sont parallèles l'une à l'autre, et se superposent en partie l'une à l'autre. En l'occurrence, la partie de la deuxième surface S2', qui se superpose à la première surface S1', est formée de plusieurs petits triangles (un pour chaque dent de scie) et a une aire totale As (aire de superposition). Lors d'un déplacement x de l'électrode mobile 16' par rapport à l'électrode fixe 17', selon la direction X, l'aire de superposition As varie de manière approximativement quadratique en fonction du déplacement x (à cause de la forme en triangles de l'électrode fixe). Cette variation d'aire entraine une variation de la capacité électrique C du condensateur formé par les première et deuxième électrodes 16' et 17', variation qui se traduit par une force de rappel élastique F ~ - k.x, sensiblement linéaire en fonction du déplacement x. En l'occurrence, le coefficient de raideur k associé à cette force de rappel est donné par la formule F1 suivante :

$$k = -\frac{1}{2} V_o^2 \frac{\partial^2 C}{\partial x^2} \quad (F1)$$

où Vo est la tension électrique entre la première électrode 16' et la deuxième électrode 17'.

Le coefficient de raideur k peut donc être ajusté électriquement. En pratique, ce coefficient de raideur k s'ajoute à celui du ressort qui lie la masse mobile au support. En ajustant le coefficient de raideur k (d'origine électrique), on peut donc ajuster le coefficient de raideur total (d'origine électrostatique + d'origine mécanique) associé à la force de rappel totale subie par la masse mobile.

Dans un gyromètre comme celui de la figure 1, un tel condensateur à surface variable permet, pour l'un des deux cadres mobiles, d'ajuster le coefficient de raideur de la force de rappel totale exercée sur ce cadre et de rendre ainsi les fréquences de résonance respectives des deux cadres égales l'une à l'autre.

Mais, après un tel ajustement, on constate en pratique que d'autres imperfections perdurent, dans le fonctionnement du gyromètre 1' (imperfections autres que la sensibilité aux vibrations mécaniques parasites). En particulier, avec une telle structure, et même après l'équilibrage en question, on observe fréquemment un biais de mesure affectant la valeur de la vitesse de rotation $\Omega_z$ obtenue finalement.

De plus, la valeur du coefficient de rappel k d'origine électrostatique reste limitée et ne permet qu'un ajustement modéré du coefficient de raideur global, pour le cadre considéré.

En outre, avec le système de condensateur du document US 8,971,012, la force rappel F, qui, en première approche, est linéaire en fonction du déplacement x, peut présenter des non-linéarités (c'est-à-dire comprendre des termes qui ne sont pas linéaires en fonction de x).

Le document US 2013/093437 A1 décrit un capteur comprenant un condensateur à surface variable, permettant de détecter une force de cisaillement. Ce capteur capacitif comprend deux électrodes triangulaires.

## RESUME

Pour résoudre au moins certains des problèmes mentionnés ci-dessus, l'invention propose un dispositif de condensateur à surface variable pour MEMS, dans lequel chacune des deux électrodes est limitée latéralement, dans une zone de recouvrement des électrodes, par deux bords rectilignes non parallèles entre eux.

Plus particulièrement, on propose un dispositif de condensateur à surface variable pour un microsystème électromécanique, le dispositif comprenant une première électrode et une deuxième électrode mobiles l'une par rapport à l'autre selon une direction de déplacement donnée, la première électrode ayant une première surface libre et la deuxième électrode ayant une deuxième surface libre sensiblement parallèle à la première surface, une partie de la première surface se superposant à une partie de la deuxième surface, dans lequel :

- la première surface est délimitée latéralement par un premier bord et un deuxième bord rectilignes et non parallèles entre eux, dans la partie où elle se superpose à la deuxième surface, dans lequel

- la deuxième surface est délimitée latéralement elle aussi, dans la partie où elle se superpose à la première surface, par un premier bord et un deuxième bord rectilignes et non parallèles entre eux et qui, en projection sur la première surface, intersectent respectivement le premier bord de la première surface et le deuxième bord de la première surface,

- le dispositif comprenant une électrode additionnelle, solidaire de la première électrode et ayant une surface libre additionnelle qui est sensiblement parallèle à la deuxième surface et qui se superpose en partie à la deuxième surface, la surface libre additionnelle étant complémentaire de la première surface libre, au moins :

    - au voisinage d'un premier point de chevauchement où, en projection sur la première surface, le premier bord de la deuxième surface intersecte le premier bord de la première surface, et

    - au voisinage d'un deuxième point de chevauchement où, en projection sur la première surface, le deuxième bord de la deuxième surface intersecte le deuxième bord de la première surface.

En projection sur la première surface, le premier bord de la deuxième surface intersecte le premier bord de la première surface en un premier point appelé premier point de chevauchement. De même, en projection sur la première surface, le deuxième bord de la deuxième surface intersecte le deuxième bord de la première surface en un deuxième point appelé deuxième point de chevauchement.

Quoiqu'il en soit, la configuration originale de condensateur présentée ci-dessus, dans lequel les deux surfaces en influence électrostatique sont délimitées, chacune, par deux bords rectilignes inclinés l'un par rapport à l'autre, s'avère particulièrement intéressante en pratique.

En effet, comme expliqué en détail en référence aux figures, cette configuration permet d'obtenir des valeurs de coefficients de raideur plus élevées que ce qui peut être obtenu avec le système de l'art antérieur US 8,971,012.

Cette structure particulière permet par ailleurs d'exercer une force transverse entre les deux électrodes, cette force étant perpendiculaire à la direction de déplacement et proportionnelle, au moins approximativement, au déplacement entre ces deux électrodes. Grâce à la géométrie particulière des première et deuxième électrodes (toutes deux à bords inclinés), on peut ainsi introduire entre elles un coefficient de raideur *transverse*, ajustable électriquement, ce qui trouve de nombreuses applications intéressantes dans le domaine des MEMS.

Outre les caractéristiques qui viennent d'être mentionnées ci-dessus, le dispositif selon un aspect de l'invention, qui vient d'être présenté, peut présenter une ou plusieurs caractéristiques complémentaires parmi les suivantes, considérées individuellement ou selon toutes les combinaisons techniquement possibles :

- le premier bord et le deuxième bord de la première surface sont perpendiculaires l'un à l'autre, à plus ou moins 15 degrés près, voire à plus ou moins 5 degrés près ; comme expliqué en détail plus bas, cette caractéristique favorise l'obtention d'un coefficient de raideur transverse élevé ;

- le premier bord et le deuxième bord de la deuxième surface sont perpendiculaires l'un à l'autre, à plus ou moins 15 degrés près, voire à plus ou moins 5 degrés près ; cela favorise aussi l'obtention d'un coefficient de raideur transverse élevé ;

- le premier bord de la première surface et le premier bord de la deuxième surface sont perpendiculaires l'un à l'autre, à plus ou moins 15 degrés près, voire à plus ou moins 5 degrés près ; cela favorise aussi l'obtention d'un coefficient de raideur transverse élevé ;

- le deuxième bord de la première surface et le deuxième bord de la deuxième surface sont perpendiculaires l'un à l'autre, à plus ou moins 15 degrés près, voire à plus ou moins 5 degrés près ; cela favorise aussi l'obtention d'un coefficient de raideur transverse élevé ;

- ladite direction de déplacement est parallèle au moins au premier bord de la première surface, ou au premier bord de la deuxième surface, à plus ou moins 15 degrés près, voire à plus ou moins 5 degrés près ; cela favorise aussi l'obtention d'un coefficient de raideur transverse élevé, et minimise voire annule le coefficient de raideur longitudinal ;

- ladite direction de déplacement est parallèle aussi au deuxième bord de la première surface, ou au deuxième bord de la deuxième surface, à plus ou moins 15 degrés près, voire à plus ou moins 5 degrés près ; cela favorise l'obtention d'un coefficient de raideur transverse élevé et minimise voire annule le coefficient de raideur longitudinal ;

- pour chaque secteur angulaire, délimité par le premier bord de la première surface d'une part, et par le premier bord de la deuxième surface d'autre part, ladite direction de déplacement est écartée angulairement de la bissectrice dudit secteur angulaire d'au moins 15 degrés, voire d'au moins 30 degrés ; on s'écarte ainsi d'une situation dans laquelle le coefficient de raideur transverse serait nul ;

- pour chaque secteur angulaire, délimité par le deuxième bord de la première surface d'une part, et par le deuxième bord de la deuxième surface d'autre part, ladite direction de déplacement est écartée angulairement de la bissectrice dudit secteur angulaire d'au moins 15 degrés, voire d'au moins 30 degrés ;

- un secteur angulaire, délimité par le premier bord de la première surface et par le premier bord de la deuxième surface, et dans lequel se trouve ladite direction de déplacement, a une ouverture angulaire de 120 degrés, à plus ou moins 15 degrés près, voire à plus ou moins 5 degrés près ; cela favorise l'obtention d'un coefficient de raideur longitudinal élevé ;

- un secteur angulaire, délimité par le deuxième bord de la première surface et par le deuxième bord de la deuxième surface, et dans lequel se trouve ladite direction de déplacement, a une ouverture angulaire de 120 degrés, à plus ou moins 15 degrés près, voire à plus ou moins 5 degrés près ;

- chaque secteur angulaire délimité par le premier bord de la première surface et par le premier bord de la deuxième surface a une ouverture angulaire égale soit à 120 degrés, soit à 60 degrés, à plus ou moins 10 degrés près ;

- chaque secteur angulaire délimité par le deuxième bord de la première surface et par le deuxième bord de la deuxième surface a une ouverture angulaire égale soit à 120 degrés, soit à 60 degrés, à plus ou moins 10 degrés près ;

- l'ouverture angulaire de la partie de la première surface délimitée par ses premier et deuxième bords est égale à 120 degrés ou à 60 degrés, à plus ou moins 10 degrés près ;

- l'ouverture angulaire de la partie de la deuxième surface délimitée par ses premier et deuxième bords est égale à 120 degrés, ou à 60 degrés, à plus ou moins 10 degrés près ;

- ladite direction de déplacement est parallèle au moins à la bissectrice de l'un des secteurs angulaires délimités par le premier bord de la première surface d'une part, et par le premier bord de la deuxième surface d'autre part, à plus ou moins 15 degrés près, voire à plus ou moins 5 degrés près ; cela favorise aussi l'obtention d'un coefficient de raideur longitudinal élevé, et minimise voire annule le coefficient de raideur transverse ;

- ladite direction de déplacement est parallèle aussi à la bissectrice de l'un des secteurs angulaires délimités par le deuxième bord de la première surface d'une part, et par le deuxième bord de la deuxième surface d'autre part, à plus ou moins 15 degrés près, voire à plus ou moins 5 degrés près ;

- ladite direction de déplacement est écartée d'au moins 15 degrés de chacun desdits bords ;

- dans une direction perpendiculaire aux première et deuxième surfaces, les première et deuxième surfaces sont séparées l'une de l'autre par une distance donnée, et en projection sur ladite direction de déplacement, les premier et deuxième bords rectilignes qui délimitent la première surface libre ont chacun une longueur supérieure à trois fois ladite distance, voire supérieure à six fois ladite distance ; comme expliqué dans la description, cela limite les effets de bords, et cela permet que la force de rappel varie linéairement en fonction du déplacement sur une plage de déplacement importante ;

- en projection sur ladite direction de déplacement, les premier et deuxième bords rectilignes qui délimitent la deuxième surface libre ont chacun une longueur supérieure à trois fois ladite distance, voire supérieure à six fois ladite distance ;

- l'électrode additionnelle est isolée électriquement de la première électrode et de la deuxième électrode de sorte qu'une tension électrique entre l'électrode additionnelle et la première électrode peut être réglée indépendamment d'une tension électrique entre la deuxième électrode et la première électrode ;

- les première et deuxième surfaces libres forment un premier condensateur à surface variable ;

- la première électrode fait partie d'une première pièce, qui présente une troisième surface libre, en plus de la première surface libre ;

- la deuxième électrode fait partie d'une deuxième pièce, mobile par rapport à la première pièce selon ladite direction de déplacement, et qui présente une quatrième surface libre, en plus de la deuxième surface libre, la quatrième surface libre étant sensiblement parallèle à la troisième surface libre et se superposant en partie à la troisième surface libre pour former avec elle un deuxième condensateur à surface variable ;

- les deuxième et quatrième surfaces libres de la deuxième pièce ont des vecteurs normaux sortants respectifs dirigés dans des sens opposés ; On notera que le dispositif peut présenter cette caractéristique, ainsi que les trois précédentes (trois items précédents), même si les premier et deuxième bords mentionnés plus haut, qui délimitent la deuxième surface, ne sont pas « rectilignes et non parallèles entre eux » ;

- la deuxième pièce a une forme allongée selon un axe longitudinal, ledit axe longitudinal est parallèle à la deuxième surface et à la quatrième surface, et la deuxième surface et la quatrième surface s'étendent en porte-à-faux, d'un même côté de la deuxième pièce.

- deuxième surface libre et la quatrième surface libre sont formées sur deux faces opposées de la deuxième électrode et se superposent entièrement l'une à l'autre.

L'invention concerne aussi un système de condensateurs à surface variable pour un microsystème électromécanique, le système comprenant un premier dispositif de condensateur à surface variable tel que décrit ci-dessus, par exemple conformé pour maximiser le coefficient de raideur transverse, ainsi qu'un deuxième dispositif de condensateur à surface variable tel que décrit ci-dessus, par exemple conformé pour maximiser le coefficient de raideur longitudinal, dans lequel la première électrode du premier dispositif de condensateur et la première électrode du deuxième dispositif de condensateur sont solidaires l'une de l'autre, et dans lequel la deuxième électrode du premier dispositif de condensateur et la deuxième électrode du deuxième dispositif de condensateur font parties d'une même pièce mécanique, ou d'un même ensemble de pièces mécaniques, mobile par rapport aux premières électrodes selon ladite direction de déplacement ; un tel système permet d'ajuster indépendamment le coefficient de raideur transverse, et le coefficient de raideur longitudinal, de manière commode.

L'invention concerne aussi un accéléromètre de type microsystème électromécanique, comprenant :

- un dispositif de condensateur à surface variable tel que décrit ci-dessus, ou un système de condensateurs à surface variable tel que celui qui vient d'être présenté ;

- un support, la première électrode étant solidaire du support, et

- une pièce mobile, mobile par rapport au support selon ladite direction de déplacement, la deuxième électrode étant solidaire de ladite pièce mobile.

L'invention concerne aussi un gyromètre de type microsystème électromécanique, comprenant :

- un dispositif de condensateur à surface variable tel que décrit ci-dessus, ou un système de condensateurs à surface variable tel que celui qui vient d'être présenté ;

- un support, la première électrode étant solidaire du support, et

- un cadre mobile ou une masse d'épreuve, mobile par rapport au support selon ladite direction de déplacement, la deuxième électrode étant solidaire du cadre mobile ou de la masse d'épreuve.

L'invention concerne aussi, plus généralement, un microsystème électromécanique pourvu d'un dispositif de condensateur à surface variable tel que décrit ci-dessus.

L'invention et ses différentes applications seront mieux comprises à la lecture de la description qui suit et à l'examen des figures qui l'accompagnent.

On notera que, dans l'ensemble de ce document, un microsystème électromécanique, ou MEMS désigne un système comprenant au moins une pièce mobile ou déformable, utilisant l'électricité comme source d'énergie en vue de réaliser une fonction de capteur ou d'actionneur, et comprenant au moins un organe ayant une dimension micrométrique (3 microns au plus) selon une, deux, ou même trois dimensions.

## BREVE DESCRIPTION DES FIGURES

Les figures sont présentées à titre indicatif et nullement limitatif de l'invention.

La figure 1 montre schématiquement un gyromètre à double cadre, vu de dessus.

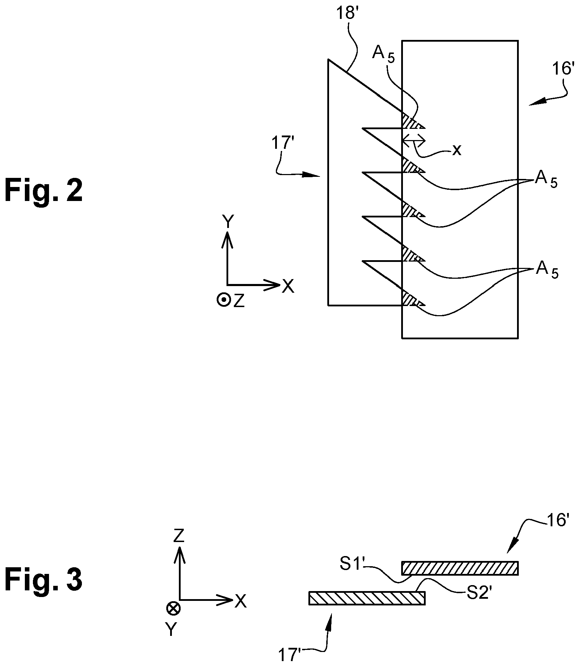

La figure 2 montre schématiquement un dispositif de condensateur à surface variable de l'art antérieur, vu de dessus.

La figure 3 montre schématiquement le dispositif de la figure 2, vu de côté.

La figure 4 montre schématiquement un dispositif de condensateur à surface variable mettant en oeuvre les enseignements de l'invention, vu de dessus.

La figure 5 montre plus en détail une partie du dispositif de la figure 4.

La figure 6 montre schématiquement un autre dispositif de condensateur à surface variable mettant en oeuvre les enseignements de l'invention, configuré pour obtenir un coefficient de raideur longitudinal négatif de valeur absolue élevée, vu de dessus.

La figure 7 montre schématiquement le dispositif de la figure 6, vu de côté, en coupe.

La figure 8 montre schématiquement un autre dispositif de condensateur à surface variable mettant en oeuvre les enseignements de l'invention, vu de dessus.

La figure 9 montre schématiquement un autre dispositif de condensateur à surface variable mettant en oeuvre les enseignements de l'invention, vu de dessus.

La figure 10 montre schématiquement un autre dispositif de condensateur à surface variable mettant en oeuvre les enseignements de l'invention, configuré pour obtenir un coefficient de raideur longitudinal positif, de valeur absolue élevée, vu de dessus.

La figure 11 montre schématiquement un autre dispositif de condensateur à surface variable mettant en oeuvre les enseignements de l'invention, vu de dessus.

La figure 12 montre schématiquement un autre dispositif de condensateur à surface variable mettant en oeuvre les enseignements de l'invention, vu de dessus.

La figure 13 montre schématiquement un autre dispositif de condensateur à surface variable mettant en oeuvre les enseignements de l'invention, comprenant un grand nombre de surface de superposition élémentaires, configuré pour obtenir un coefficient de raideur longitudinal négatif de valeur absolue élevée, vu de dessus.

La figure 14 montre schématiquement un autre dispositif de condensateur à surface variable mettant en oeuvre les enseignements de l'invention, comprenant un grand nombre de surface de superposition élémentaires, vu de dessus.

La figure 15 montre schématiquement un autre dispositif de condensateur à surface variable mettant en oeuvre les enseignements de l'invention, configuré pour obtenir un coefficient de raideur transverse de valeur absolue élevée, vu de dessus.

La figure 16 montre schématiquement un autre dispositif de condensateur à surface variable mettant en oeuvre les enseignements de l'invention, vu de dessus.

La figure 17 montre schématiquement un autre dispositif de condensateur à surface variable mettant en oeuvre les enseignements de l'invention, vu de dessus.

La figure 18 montre schématiquement un autre dispositif de condensateur à surface variable mettant en oeuvre les enseignements de l'invention, comprenant un grand nombre de surface de superposition élémentaires, configuré pour obtenir un coefficient de raideur transverse de valeur absolue élevée, vu de dessus.

La figure 19 montre schématiquement un dispositif de condensateur à surface variable mettant en oeuvre les enseignements de l'invention, à trois électrodes dont deux complémentaires l'une de l'autre, vu de dessus.

La figure 20 montre schématiquement le dispositif de la figure 19, vue de côté, en coupe.

La figure 21 montre schématiquement un autre dispositif de condensateur à surface variable mettant en oeuvre les enseignements de l'invention, à trois électrodes dont deux complémentaires l'une de l'autre, vu de dessus.

La figure 22 montre schématiquement le dispositif de la figure 21, vue de côté, en coupe.

La figure 23A montre schématiquement un dispositif de condensateur à surface variable mettant en oeuvre les enseignements de l'invention, à double condensateur, permettant de compenser des forces électrostatiques perpendiculaires aux surfaces de travail, vu de dessus.

La figure 23B montre schématiquement un dispositif de condensateur à surface variable comparable à celui de la figure 23A, mais configuré pour obtenir une raideur électrostatique transverse plutôt que longitudinale.

La figure 24A montre schématiquement le dispositif de la figure 23A, vue de côté, en coupe.

La figure 24B montre schématiquement le dispositif de la figure 23B, vue de côté, en coupe.

La figure 25A montre schématiquement un autre dispositif de condensateur à surface variable mettant en oeuvre les enseignements de l'invention, à double condensateur, vu de dessus.

La figure 25B montre schématiquement un dispositif de condensateur à surface variable comparable à celui de la figure 25A, mais configuré pour obtenir une raideur électrostatique transverse plutôt que longitudinale.

Les figures 26A et 26B montrent schématiquement le dispositif de la figure 25A, et, respectivement, le dispositif de la figure 25B, vus de côté, selon un premier plan de coupe.

Les figures 27A et 27B montrent schématiquement le dispositif de la figure 25A, et, respectivement, le dispositif de la figure 25B, vu de côté, selon un deuxième plan de coupe.

La figure 28 montre schématiquement un autre dispositif de condensateur à surface variable mettant en oeuvre les enseignements de l'invention, à double condensateur, vu en coupe.

La figure 29 montre schématiquement un dispositif de condensateur à surface variable mettant en oeuvre les enseignements de l'invention, dans une première position extrémale, vu de dessus.

La figure 30A montre schématiquement le dispositif de la figure 29, dans une deuxième position extrémale, vu de dessus.

La figure 30B montre schématiquement la définition de l'une des grandeurs géométriques caractéristique de condensateurs à surface variable tels que présentés ci-dessus, destinés à obtenir une raideur électrostatique transverse.

La figure 31 montre schématiquement un gyromètre à double cadre, équipé de dispositifs de condensateurs à surface variable mettant en oeuvre les enseignements de l'invention, vu de dessus.

La figure 32 est une vue de détail montrant une variante de réalisation envisageable pour l'un des dispositifs de condensateur du gyromètre de la figure 31.

## DESCRIPTION DETAILLEE

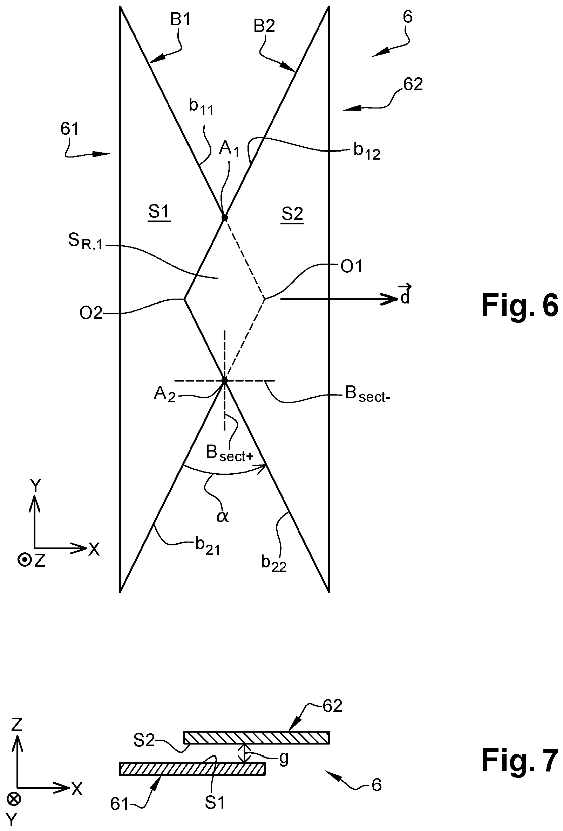

Comme mentionné plus haut, l'invention concerne un dispositif de condensateur à surface variable pour un microsystème électromécanique. Ce dispositif comprend au moins une première électrode 61 ; 151 et une deuxième électrode 62 ; 152 qui se superposent en partie l'une à l'autre pour former le condensateur en question (voir les figures 6, 7 et 15 par exemple).

Les première et deuxième électrodes sont mobiles l'une par rapport à l'autre selon une direction de déplacement d donnée. Lorsqu'elles se déplacent l'une par rapport à l'autre, l'aire de superposition $A_S$ sur laquelle les électrodes se superposent varie (en l'occurrence plus fortement que pour une variation linéaire en r, r étant l'amplitude de déplacement ; en pratique, cette variation est par exemple de la forme $a.r^2+b.r+a_o$). Comme expliqué dans la partie intitulée « arrière-plan technologique », cette variation de surface est à l'origine d'une force de rappel, ou d'une force répulsive, d'origine électrostatique, associée à un coefficient de raideur dont la valeur est réglable électriquement.

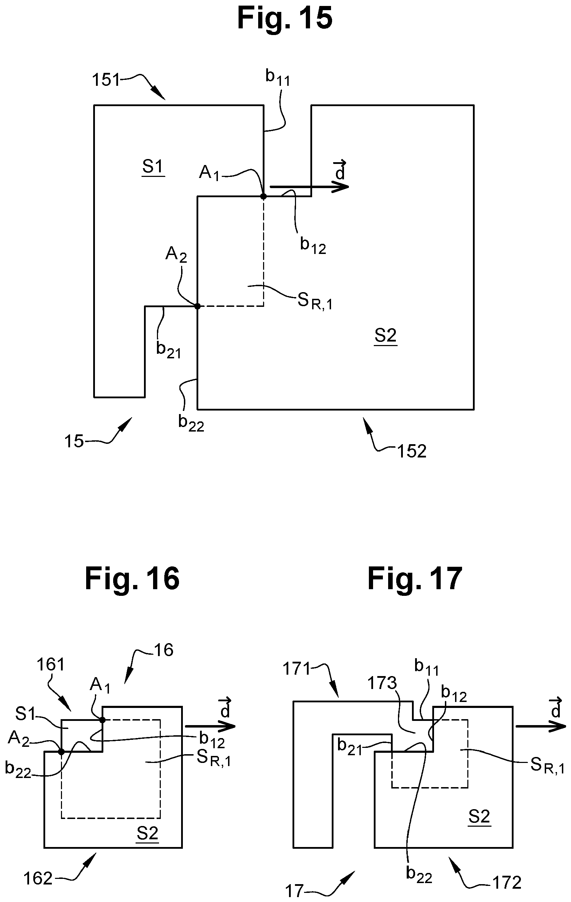

Dans le dispositif de condensateur conforme à l'invention, l'ensemble comprenant les première et deuxième électrodes 61 ; 151 et 62 ; 152 a une structure remarquable (figures 6 et 15) : dans la zone où elles se superposent l'une à l'autre, chacune des première et deuxième électrodes est délimitée latéralement par deux bords rectilignes non parallèles entre eux, $b_{11}$ et $b_{21}$ (pour la première électrode 61 ; 151), et $b_{12}$ et $b_{22}$ (pour la deuxième électrode 52 ; 152). Cela peut être obtenu par exemple en donnant aux deux électrodes la forme d'un triangle, les deux triangles se recouvrant en partie l'un l'autre (figures 6 et 15).

Cette structure particulière permet entre autres d'exercer entre les deux électrodes 151, 152 une force transverse, perpendiculaire à la direction de déplacement d, qui, au moins approximativement, varie proportionnellement au déplacement r en question (figure 15). Grâce à la géométrie particulière des première et deuxième électrodes, on introduit ainsi, entre elles, un coefficient de raideur transverse $K_T$, ajustable électriquement, ce qui trouve de nombreuses applications intéressantes dans le domaine des MEMS.

Par ailleurs, lorsque le dispositif de condensateur conforme à l'invention est configuré pour obtenir un coefficient de raideur longitudinal $K_{//}$, plutôt qu'un coefficient de raideur transverse $K_T$ (comme dans le cas de la figure 6, par exemple) la structure particulière des première et deuxième électrodes employées ici permet d'obtenir un coefficient de raideur longitudinal $K_{//}$ plus élevé qu'avec les dispositifs de l'art antérieur.

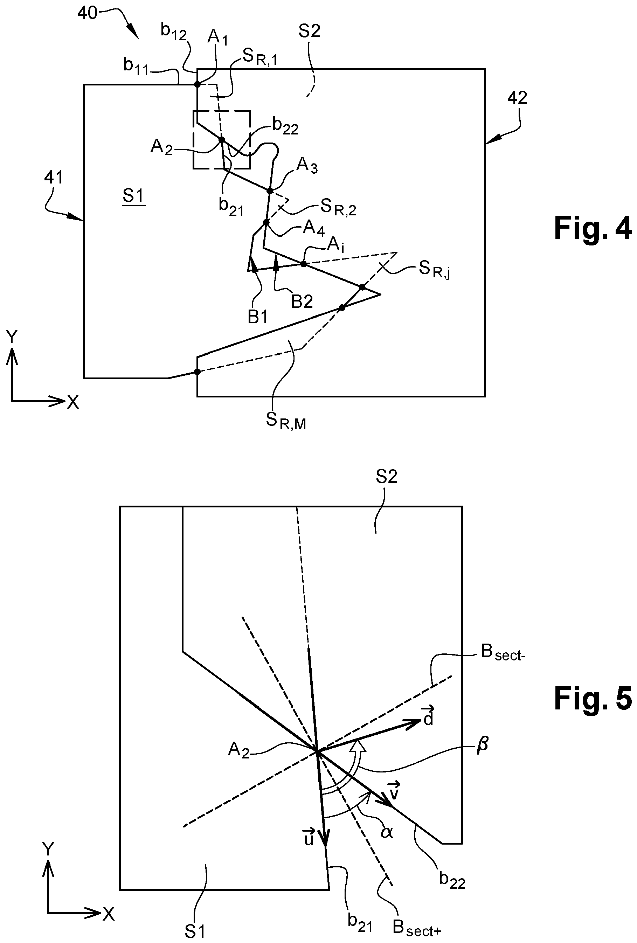

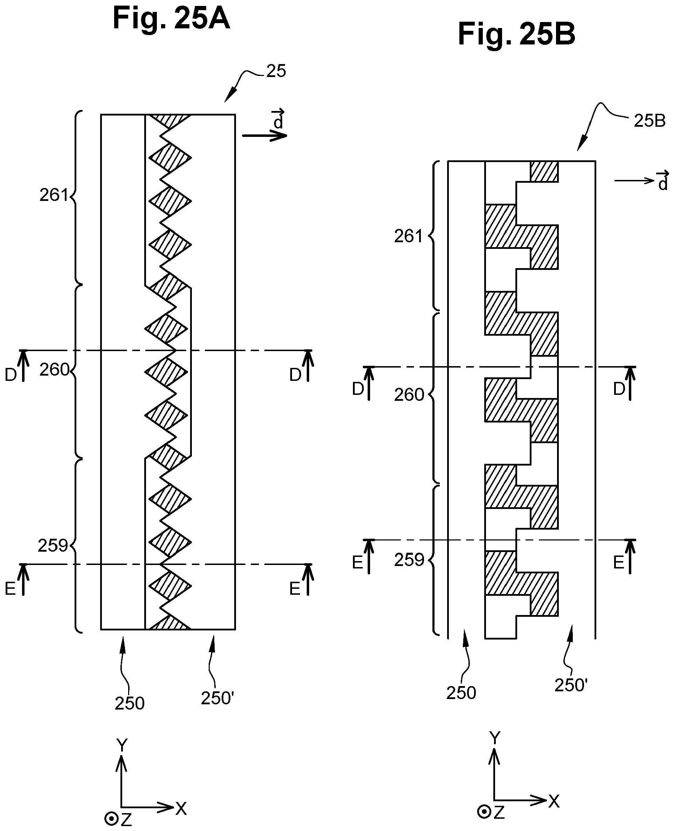

Sur les figures, on a représenté différentes variantes de réalisation du dispositif conformes à l'invention. Ces différentes variantes du dispositif, 4 ; 6 ; 8 ; 9 ; 10 ; 11 ; 12 ; 13 ; 14 ; 15 ; 16 ; 17 ; 18 ; 19 ; 21 ; 23 ; 23B ; 25 ; 25B et 28 sont représentées respectivement sur les figures 4, 6, 8, 9, 10, 11, 12, 13, 14, 15, 16, 17, 18, 19, 21, 23A, 23B, 25A, 25B et 28 (soit 20 variantes de réalisation différentes). Ces différentes variantes présentent des différences les unes par rapport aux autres mais elles présentent aussi de nombreux points communs. Aussi, d'une variante à l'autre, les éléments identiques ou correspondant seront autant que possible repérés par les mêmes signes de référence et ne seront pas nécessairement décrits à chaque fois.

Dans un premier temps, la structure générale des première et deuxième électrodes sera définie plus précisément.

Dans un deuxième temps, en référence aux figures 4 et 5, on décrira comment la géométrie des électrodes, en particulier l'angle entre les bords des électrodes, influence la force électrostatique entre électrodes. Cela permettra d'identifier :

- un premier type de configuration, permettant d'obtenir un coefficient de raideur longitudinal $K_{//}$ élevé et un coefficient de raideur transverse $K_T$ faible voire nul, et

- un deuxième type de configuration, permettant au contraire d'obtenir un coefficient de raideur transverse $K_T$ élevé et un coefficient de raideur longitudinal $K_{//}$ faible voire nul.

Différentes variantes de réalisation correspondant au premier type de configuration (raideur longitudinale) sont présentées ensuite, en référence aux figures 6 à 14.

Puis différentes variantes de réalisation correspondant au deuxième type de configuration (raideur transverse) sont présentées en référence aux figures 15 à 18.

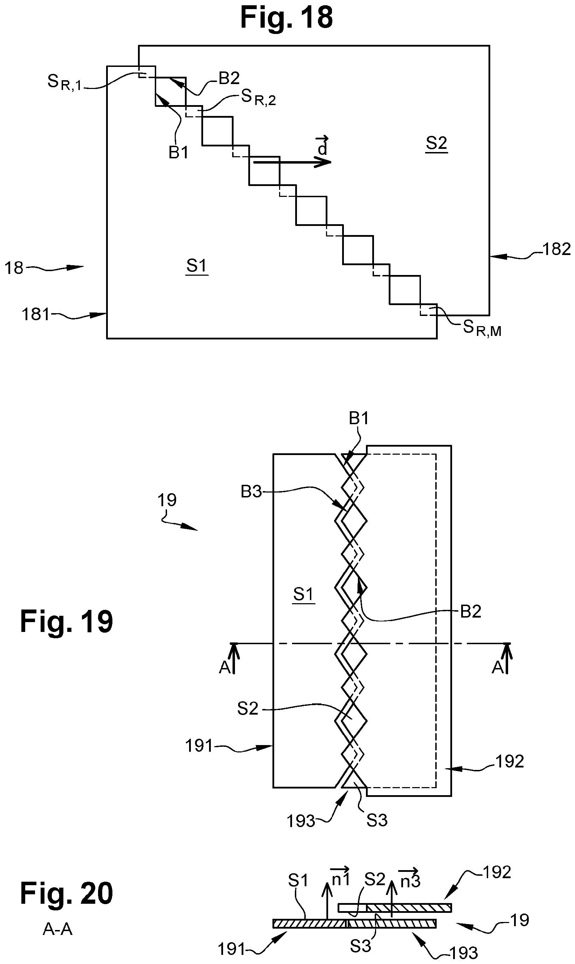

Le dispositif selon l'invention présente une configuration particulière à trois électrodes dont deux sont complémentaires l'une de l'autre, qui est présentée ensuite en référence aux figures 19 à 22. Cette configuration à trois électrodes dont deux complémentaires l'une de l'autre est présente dans les différentes variantes de l'invention. Toutefois, elle n'est pas nécessairement représentée sur toutes les figures.

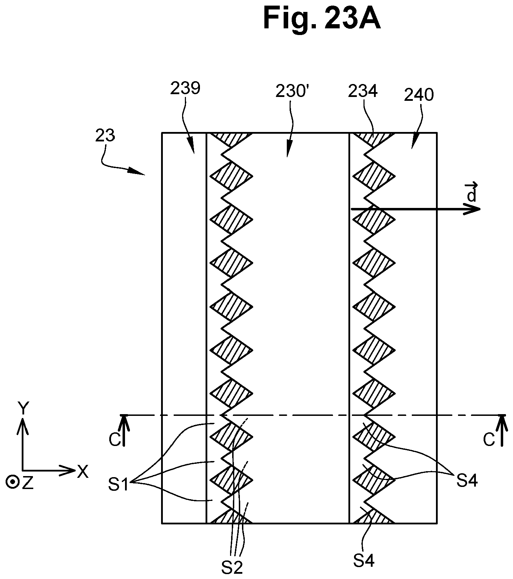

D'autres configurations, à double condensateur, permettant de compenser des forces électrostatiques perpendiculaires aux surfaces libres des électrodes (forces « verticales »), sont décrites ensuite, en référence aux figures 23A à 28.

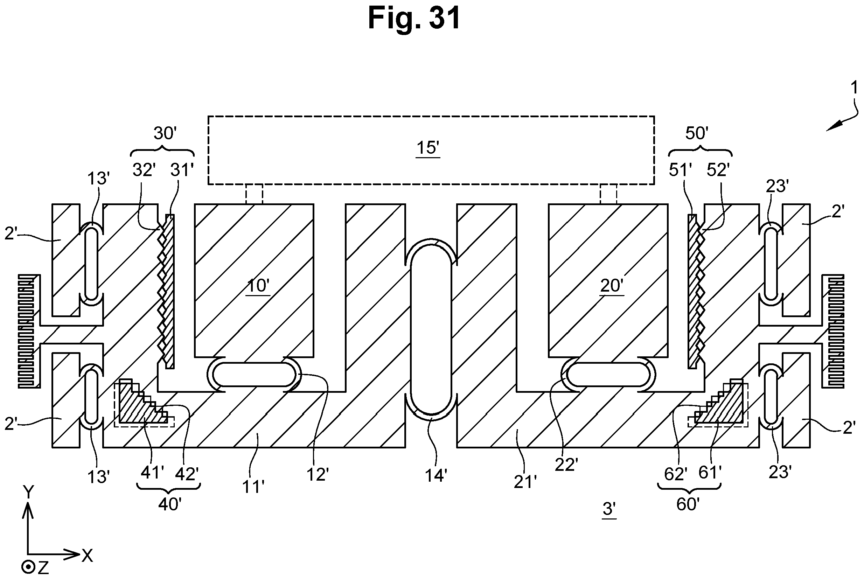

Enfin, on décrit un exemple de gyromètre équipé du dispositif de condensateur à surface variable conforme à l'invention (figure 31).

La structure d'ensemble des première et deuxième électrodes est maintenant définie plus en détail. Pour alléger les notations, les références numériques des première et deuxièmes électrodes, 41 ; 61 ; 151 et 42 ; 62 ; 152, ont été indiquées seulement pour trois des variantes du dispositif de condensateur 4 ; 6 et 15. Les caractéristiques générales présentées ci-dessous (avant de rentrer dans les spécificités des différentes variantes de réalisation) concernent toutefois les différentes variantes de réalisation, représentées sur les figures 4 à 28.

Dans ces différentes variantes de réalisation, la première électrode 41 ; 61 ; 151 a une première surface libre, S1, et la deuxième électrode 42 ; 62 ; 152 a une deuxième surface libre, S2, sensiblement parallèle à la première surface S1, c'est-à-dire parallèle à la première surface S1 à plus ou moins 15 degrés près. Ici, chacune des première et deuxième surface S1, S2 est une surface plane.

Une partie de la première surface S1 s'étend en vis-à-vis, c'est-à-dire en face d'une partie de la deuxième surface S2, et est donc en influence électrostatique avec celle-ci. En d'autres termes, les première et deuxième surfaces S1 et S2 se superposent en partie l'une à l'autre (voir les figures 6 et 7, par exemple).

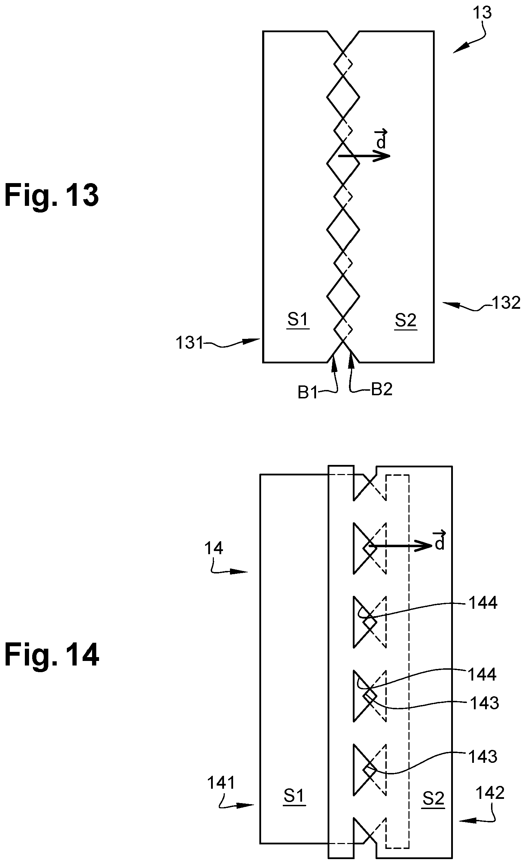

La zone sur laquelle les première et deuxième surfaces S1 et S2 se superposent l'une à l'autre peut être formée de plusieurs parties disjointes les unes des autres, comme on le voit par exemple sur les figures 4, 13, 14, 18, 19 ou 25. En d'autres termes, cette zone peut être formée de plusieurs surfaces de recouvrement élémentaires. C'est le cas par exemple lorsque les première et deuxième électrodes 131 et 132 comprennent chacune une rangée de dents triangulaires, ces deux rangées se superposant en partie l'une à l'autre (voir la figure 13, par exemple).

Toutefois, la zone sur laquelle les première et deuxième surfaces S1 et S2 se superposent l'une à l'autre peut aussi être d'un seul tenant (c'est-à-dire former une unique surface de recouvrement d'un seul tenant).

Quoi qu'il en soit, les première et deuxième surfaces S1 et S2 se superposent l'une à l'autre sur une zone d'aire totale $A_S$. Cette aire varie lorsque les première et deuxième électrodes se déplacent l'une par rapport à l'autre selon la direction de déplacement d en question.

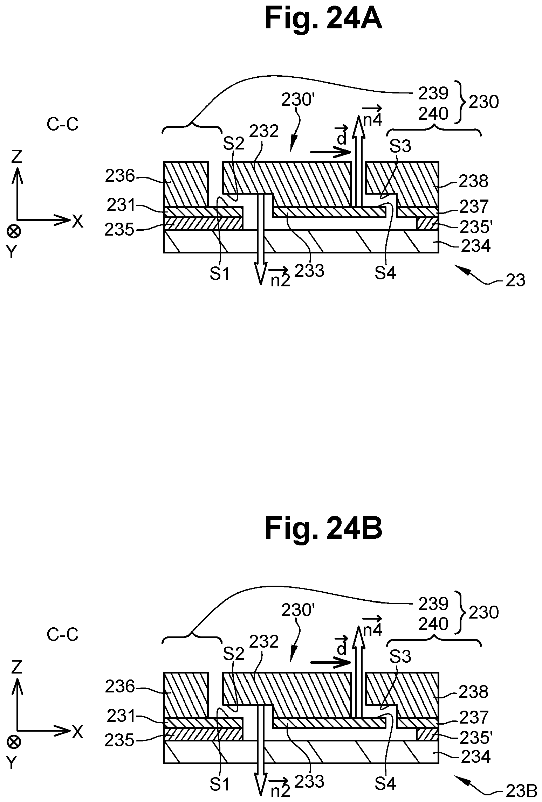

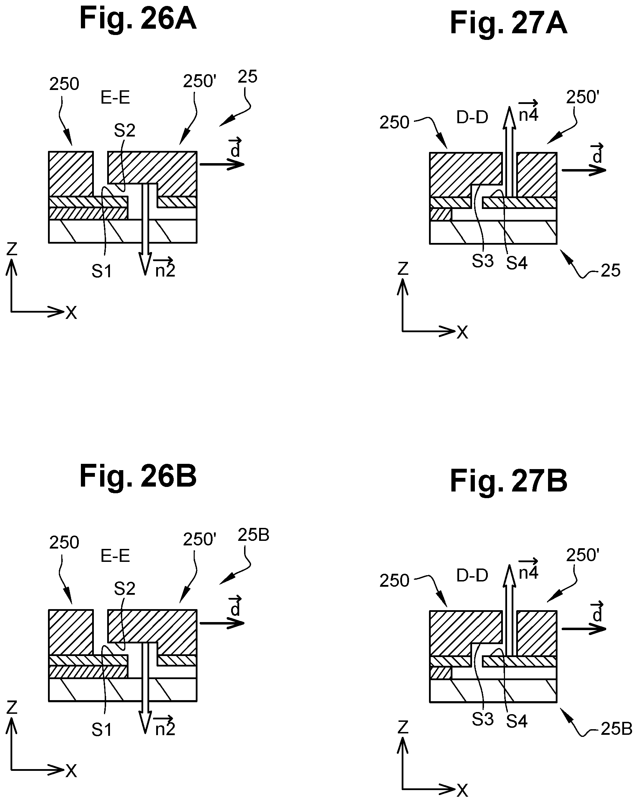

En pratique, la première électrode est solidaire d'une première pièce, par exemple fixe par rapport au substrat sur lequel est réalisé le MEMS, tandis que la deuxième électrode est solidaire d'une deuxième pièce, par exemple une masse d'épreuve, mobile par rapport à la première pièce (voir par exemple le dispositif 23 représenté sur les figures 23A et 24A, où les première et deuxième électrodes 231, 232 font partie respectivement d'un support 239 qui est fixe par rapport au substrat 234, et d'une pièce mobile 230' ; voir aussi les figures 26A, 28 ou 31). La deuxième pièce est reliée mécaniquement à la première pièce ou au substrat, par exemple par un ou plusieurs ressorts mécaniques (tels que ceux, 13', 23' représentés sur la figure 31), de manière à autoriser un déplacement de la deuxième pièce par rapport à la première pièce selon la direction de déplacement d en question. Dans l'ensemble de ce document, le terme « solidaire » signifie solidaire d'un point de vue mécanique, c'est-à-dire sans mouvement relatif, ou, autrement dit, rigidement lié l'un à l'autre. Toutefois, on notera que deux éléments solidaires l'un de l'autre ne sont pas nécessairement contigus ou en contact l'un avec l'autre, et qu'ils peuvent être distincts l'un de l'autre. On notera aussi que ces deux éléments peuvent très bien être isolés électriquement l'un de l'autre (par exemple par une ou des couches d'oxydes).

La deuxième pièce peut en particulier être reliée à la première pièce par des liaisons mécaniques (par exemple des ressorts) qui autorisent seulement un déplacement selon la direction de déplacement d, ou, tout au moins, qui limitent fortement les déplacements dans les autres directions (les déplacements autorisés dans les autres directions ayant alors une amplitude nettement inférieure au déplacement autorisé dans la direction d). La direction de déplacement d correspond alors à une direction de déplacement moyenne, imposée à la deuxième électrode par les liaisons mécaniques en question. En d'autres termes, il s'agit d'une direction de guidage, la deuxième électrode étant guidée de manière à se déplacer parallèlement à cette direction. Cette situation peut correspondre par exemple à un cas dans lequel la deuxième électrode est intégrée au cadre mobile d'un gyromètre, tel que celui de la figure 1 (dans ce cas, le type de ressorts employé impose au cadre de se déplacer presque exclusivement selon la direction X, qui correspond alors à la direction de déplacement d).

Dans d'autres cas, la deuxième pièce peut être reliée à la première pièce par des liaisons mécaniques qui autorisent non seulement un déplacement selon la direction de déplacement d, mais aussi un déplacement selon une ou plusieurs autres directions. La deuxième pièce peut en particulier être reliée à la première pièce de manière à disposer de deux degrés de liberté en translation (déplacement à deux dimensions par rapport à la première pièce), par exemple selon des directions X et Y perpendiculaires entre elles et parallèles aux surfaces libres des électrodes.

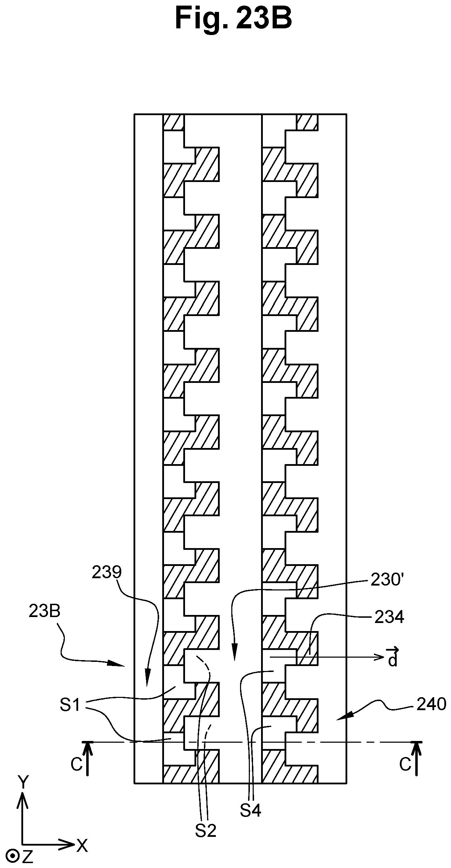

Dans l'exemple de la figure 23A, 23B ou 31, la première électrode est fixe par rapport à un substrat sur lequel est réalisé le dispositif, tandis que la deuxième électrode est mobile par rapport à ce substrat. Mais dans d'autres variantes, les première et deuxième électrodes pourraient être mobiles toutes deux par rapport à un troisième élément, tel que le substrat en question. On notera à ce sujet que c'est le mouvement relatif de la première électrode par rapport à la deuxième électrode qui définit la direction de déplacement d en question. Quoiqu'il en soit, ici, la direction de déplacement d est parallèle (à plus ou moins 15 degrés près, voire moins) à la première surface S1. Les première et deuxième électrodes se déplacent ainsi parallèlement l'une à l'autre (c'est-à-dire de manière à ce que leurs surfaces libres respectives S1 et S2 restent parallèles l'une à l'autre), lors de ce déplacement.

La distance g qui sépare les première et deuxième surfaces S1 et S2, selon une direction Z perpendiculaire à ces surfaces, est appelé gap dans la suite (voir la figure 7, par exemple). Il s'agit de l'écart entre les deux armatures du condensateur, constituées respectivement par les première et deuxième électrodes. Cette distance g est constante, ou tout au moins constante à 10% près sur l'ensemble de la zone où les première et deuxième surfaces S1, S2 se superposent l'une à l'autre.

La deuxième surface S2 se superpose en partie à la première surface S1 en ce sens que, en projection sur la première surface S1 (projection selon la direction Z), une partie de la deuxième surface S2 coïncide avec une partie de la première surface S1.

Les figures 4 et 6 sont deux vues de dessus, respectivement du dispositif 4 et du dispositif 6. Sur ces vues, le plan de la feuille (plan de la figure) est parallèle à la première surface S1 (c'est-à-dire parallèle à la surface libre de la première électrode 41, 61). Au contraire, la figure 7 est une vue de côté, et en coupe (selon le plan de coupe F-F repéré sur la figure 6), montrant le gap g (espacement entre les première et deuxième électrodes 61 et 62, selon la direction Z).

Le terme électrode désigne une pièce au moins partiellement conductrice d'un point de vue électrique (en matériau conducteur ou semi-conducteur), dont une partie est délimitée par une surface libre (telle que la première surface S1), en l'occurrence une surface libre plane (en influence électrostatique avec la surface libre d'une autre électrode). En pratique, les première et deuxième électrodes peuvent par exemple être réalisées en semi-conducteur dopé, par exemple en silicium dopé intentionnellement. Ces première et deuxième électrodes sont par exemple obtenues par des techniques de fabrication planaire (dépôt puis lithographie et gravure), et ont alors chacune une forme de couche à deux faces parallèles (par exemple parallèles au substrat sur lequel est formé le dispositif), délimitée latéralement par une bordure obtenue par lithographie et gravure. La surface libre de l'électrode est alors formée par l'une de ces faces. La couche en question peut être intégrée à un autre élément, par exemple une masse mobile formée d'un empilement de couches gravées différemment les unes des autres (voir la figure 24A, par exemple).

Dans ses différentes variantes de réalisation, le dispositif de condensateur à surface variable peut comprendre un circuit électrique de contrôle configuré pour appliquer une tension électrique Vo, réglable électriquement, entre les deux électrodes du dispositif. Ce circuit peut être réalisé au moyen d'un composant de type source de tension pilotable électriquement.

Rôle de la géométrie des première et deuxième électrodes

On décrit maintenant comment la géométrie des électrodes, notamment l'angle entre les bords des électrodes, influence la force électrostatique entre électrodes, en référence notamment aux figures 4 et 5. La figure 5 montre, de manière agrandie, la partie du dispositif 4 qui est entourée par un rectangle en pointillé, sur la figure 4.

La zone sur laquelle les première et deuxième surfaces libres S1 et S2 se superposent l'une à l'autre est formée d'un nombre M de surfaces de recouvrement élémentaires $S_{R,1}$, $S_{R,2}$, ... $S_{R,j}$, ...$S_{R,M}$ (chacune d'un seul tenant), où M est supérieur ou égal à 1 (figure 4). Le cas M=1 correspond au cas où l'ensemble de la zone sur laquelle les première et deuxième surfaces S1 et S2 se recouvrent est d'un seul tenant (voir la figure 6 par exemple).

La première surface S1 est délimitée latéralement par une première bordure B1 (formée par exemple de plusieurs tronçons rectilignes). La deuxième surface S2 est délimitée latéralement par une deuxième bordure B2. En projection sur la première surface S1, la deuxième bordure B2 intersecte la première bordure B1 en plusieurs points $A_1$, $A_2$, ...$A_i$, ..., $A_{2 \times M}$ appelés points de chevauchement dans la suite (l'entier i, qui repère le point de chevauchement considéré, varie de 1 à $2 \times M$). En d'autres termes, en projection sur la première S1 (ou d'ailleurs en projection sur la deuxième surface S2), les première et deuxième bordures B1, B2 s'entrecroisent l'une avec l'autre plusieurs fois, aux points de chevauchement $A_1$, $A_2$, ...$A_i$, ..., $A_{2 \times M}$ (qui sont, en quelques sorte, les points de superposition entre la première bordure B1 et la deuxième bordure B2).

Pour chaque surface de recouvrement élémentaire $S_{R,1}$, $S_{R,2}$, ... $S_{R,j}$, ...$S_{R,M}$, en projection sur la première surface S1, la deuxième bordure B2 intersecte la première bordure B1 en deux points de chevauchement, appelés respectivement premier et deuxième points de chevauchement (un couple de points de chevauchement par surface de recouvrement élémentaire). Pour la surface de recouvrement élémentaire $S_{R,1}$ par exemple, les première et deuxième bordures B1, B2 se croisent (en projection sur S1) respectivement au premier point de chevauchement $A_1$ et au deuxième point de chevauchement $A_2$.

De manière remarquable, pour l'une au moins des surfaces de recouvrement élémentaire $S_{R,1}$, $S_{R,2}$, ... $S_{R,j}$, ...SR,M :

- la première bordure B1 est formée, aux premier et deuxième points de chevauchement $A_i$ et $A_{i+1}$ associés à cette surface de recouvrement élémentaire $S_{R,j}$ (où i+1=2j), respectivement par un premier et un deuxième bords $b_{i1}$ et $b_{i+1,1}$ rectilignes et non parallèles entre eux, et

- la deuxième bordure B2 est formée, aux premier et deuxième points de chevauchement $A_i$ et Ai+1 associés à cette surface de recouvrement élémentaire, respectivement par un premier et un deuxième bords $b_{i2}$ et $b_{i+1,2}$ rectilignes et non parallèles entre eux.

Par exemple, pour la première surface de recouvrement élémentaire $S_{R,1}$ (voir les figures 4 ou 6, par exemple) :

- la première bordure B1 est formée, aux premier et deuxième points de chevauchement $A_1$ et $A_2$, respectivement par un premier et un deuxième bords $b_{11}$ et $b_{21}$ rectilignes et non parallèles entre eux, et
- la deuxième bordure B2 est formée elle aussi, aux premier et deuxième points de chevauchement $A_1$ et $A_2$, respectivement par un premier et un deuxième bords $b_{12}$ et $b_{22}$ rectilignes et non parallèles entre eux.

Comme déjà indiqué, cette configuration spécifique peut être obtenue par exemple en donnant aux deux électrodes 61, 62 ; 151, 152 la forme d'un triangle, les deux triangles se recouvrant en partie l'un l'autre (figures 6 et 15). Mais elle peut être obtenue de bien d'autres manières, avec des formes d'électrodes autres que triangulaires ou trapézoïdale. En effet, en dehors des points de chevauchement (plus précisément, en dehors d'un voisinage des points de chevauchement), les bordures B1, B2 respectives des surfaces libres S1, S2 des deux électrodes peuvent avoir des formes quelconques, en particulier être formées de portions non-rectilignes. A titre d'exemple, au lieu d'avoir une forme triangulaire à extrémité pointue, comme dans le cas de la figure 6, les première et deuxième électrodes pourraient avoir une forme globalement triangulaire (à flancs rectilignes) mais arrondie au sommet. Il est toutefois important que les bordures B1 et B2 soient localement rectilignes, au niveau des points de chevauchement $A_1$, $A_2$, ...$A_i$, ..., $A_{2 \times M}$. Cela permet en effet, en première approximation, d'obtenir pour l'aire totale de superposition As une variation de la forme $a.r^2 + b.r + a_o$ (r étant l'amplitude du déplacement des deux électrodes l'une par rapport à l'autre), et donc une force électrostatique entre électrodes variant avec r de manière affine.

Comme mentionné plus haut, la configuration particulière des électrodes, qui ont toutes deux des bords rectilignes non-parallèles entre eux, dans la zone de superposition, produit des effets particulièrement intéressants : obtention d'un coefficient de raideur transverse non nul et obtention d'un coefficient de raideur longitudinal élevé, notamment. Ci-dessous, on examine plus précisément comment ces coefficients de raideur dépendent des angles entre les différents bords $b_{11}$, $b_{12}$, $b_{21}$, $b_{22}$, et de l'angle entre la direction de déplacement et ces bords.

Tout d'abord, au voisinage d'une position de référence de la deuxième électrode 41 par rapport à la première électrode 42 (par exemple au voisinage d'une position d'équilibre mécanique), l'aire totale de superposition As varie conformément à la formule F2 suivante :

$$\Delta A_S = a.r^2 + b.r + a_o \quad (F2).$$

où r est l'amplitude du déplacement r.d de la deuxième électrode par rapport à la première électrode, par rapport à la position de référence en question, d étant le vecteur unitaire définissant la direction de déplacement de la deuxième électrode 42 par rapport à la première électrode 41 (la direction de déplacement, et le vecteur unitaire correspondant sont repérés par le même signe de référence d).

Le coefficient a est donné par la formule F3 :

$$a = \sum_{i=1}^{i=2\times M} a_i \quad (F3)$$

Le coefficient $a_i$ est associé au point de chevauchement $A_i$. Il traduit la variation d'aire de superposition au voisinage du point $A_i$. L'expression du coefficient $a_i$ est donné par la formule F4 ci-dessous :

$$a_i = \frac{1}{2} (u \times d)(v \times d)\|u \times v\| \quad (F4)$$

où le symbole $\times$ désigne le produit vectoriel et où u et v sont des vecteurs unitaires, portés respectivement par les bords $b_{i1}$ et $b_{i2}$ des premières et deuxième surfaces S1 et S2, (ou, respectivement, par les bords $b_{i2}$ et $b_{i1}$, sachant que les vecteurs u et v sont choisis ici de manière à délimiter entre eux un angle $\alpha$ (dirigé de u vers v) qui est direct, c'est-à-dire tel que $|\sin(\alpha)| = \sin(\alpha)$, avec $0 < \alpha < \pi$). Tels que représentés (figure 5), les deux vecteurs u et v sont dirigés du point de chevauchement considéré (par exemple $A_2$) vers la zone où les première et deuxième surfaces ne se recouvrent pas (zone sans recouvrement).

Pour mettre plus facilement en évidence le coefficient de raideur transverse $k_{T,i}$ associé au point de chevauchement $A_i$, on introduit un repère formé de deux axes X et Y perpendiculaires entre eux et parallèles tous deux à la première surface S1 (figure 5).

Dans ce repère, le déplacement r.d s'écrit x.X+yY (X et Y étant des vecteurs unitaires) et le terme $a_i.r^2$ peut être ré-écrit sous la forme suivante :

$$a_i.r^2 = a_x.x^2 + a_y.y^2 + a_{xy}.xy \quad (F5)$$

où

$$a_x = \frac{1}{2}(u \times X)(v \times X)\|u \times v\| \quad (F6),$$

$$a_y = \frac{1}{2}(u \times Y)(v \times Y)\|u \times v\| \quad (F7)$$

et

$$a_{xy} = \frac{1}{2}(u \times X)(v \times Y)\|u \times v\| + \frac{1}{2}(u \times Y)(v \times X)\|u \times v\| \quad (F8).$$

La deuxième électrode 42 subit une force $F_{12}$ due à son interaction électrostatique avec la première électrode 41. La composante de cette force $F_{12}$ parallèle au plan (X,Y) est notée Ftot. La contribution du point de chevauchement Ai à la force Ftot est notée Fi. Dans le repère X, Y, la force Fi a l'expression suivante (en négligeant d'éventuels effets de bord) :

$$F_i = \begin{pmatrix} F_x \\ F_y \end{pmatrix} = \frac{V_o^2 . \varepsilon_o . \varepsilon_r}{2.g} \begin{pmatrix} \dfrac{\partial \Delta S}{\partial x} \\ \dfrac{\partial \Delta S}{\partial y} \end{pmatrix} + \frac{V_o^2 . \varepsilon_o . \varepsilon_r}{2.g} \begin{pmatrix} \dfrac{\partial^2 \Delta S}{\partial x^2} & \dfrac{\partial^2 \Delta S}{\partial x\,\partial y} \\ \dfrac{\partial^2 \Delta S}{\partial y\,\partial x} & \dfrac{\partial^2 \Delta S}{\partial y^2} \end{pmatrix} \begin{pmatrix} x \\ y \end{pmatrix} \quad \text{où } \Delta S$$

$$= a_i . r^2 + b_x . x + b_y . y \quad (F9)$$

Soit:

$$\begin{pmatrix} F_x \\ F_y \end{pmatrix} = \begin{pmatrix} F_{x,o} \\ F_{y,o} \end{pmatrix} + \frac{V_o^2 . \varepsilon_o . \varepsilon_r}{2.g} \begin{pmatrix} 2.a_x & a_{xy} \\ a_{xy} & 2.a_y \end{pmatrix} \begin{pmatrix} x \\ y \end{pmatrix} = \begin{pmatrix} F_{x,o} \\ F_{y,o} \end{pmatrix} - \begin{pmatrix} k_x & k_{xy} \\ k_{xy} & k_y \end{pmatrix} \begin{pmatrix} x \\ y \end{pmatrix} \quad (F10)$$

où Vo est la tension électrique entre les première et deuxième électrodes, où $\varepsilon_o$ est la permittivité diélectrique du vide, et où $\varepsilon_r$ est la permittivité diélectrique relative du milieu qui sépare les deux électrode. Ici, on considère que ce milieu est du vide, ou de l'air, et que le coefficient $\varepsilon_r$, égal ici à 1, est donc omis dans la suite.

Les coefficients de raideur (coefficients de rappel élastique) $k_x$ et $k_{xy}$ s'expriment donc comme :

$$k_x = -\frac{V_o^2 . \varepsilon_o}{g} a_x \quad \text{et } k_{xy} = -\frac{V_o^2 . \varepsilon_o}{2.g} a_{xy} \quad (F11)$$

où les expressions des coefficients $a_x$ et $a_{xy}$ sont données plus haut (formules F6 et F8).

En choisissant le vecteur X parallèle au vecteur d repérant la direction de déplacement des électrodes l'une par rapport à l'autre, on obtient alors l'expression du coefficient de raideur longitudinal $k_{//}$ (donné par $k_x$, X et d étant parallèles) et du coefficient de raideur transverse $k_T$ (donné par $k_{xy}$, X et d étant parallèles).En l'occurrence, on obtient :

$$k_{//} = -\frac{V_o^2 . \varepsilon_o}{g} a_{//} \quad \text{où } a_{//} = \frac{1}{2} \sin(\beta) . \sin(\beta - \alpha) . |\sin(\alpha)| \quad (F12)$$

et

$$k_T = -\frac{V_o^2 . \varepsilon_o}{g} a_T \quad \text{où } a_T = \frac{1}{4} \sin(2.\beta - \alpha) . |\sin(\alpha)| \quad (F13)$$

Avec, comme déjà indiqué, $\alpha$ l'angle formé entre le vecteur u et le vecteur v et $\beta$ l'angle formé entre le vecteur u et le vecteur d (figure 5). $\alpha$ est donc l'angle du secteur angulaire « sans recouvrement » délimité par les bords respectifs $b_{i1}$ et $b_{i2}$ (ou $b_{i2}$ et $b_{i1}$) des deux surfaces libres S1 et S2, au point de chevauchement Ai considéré.

Le coefficient de raideur longitudinal $k_{//}$ et le coefficient de raideur transverse $k_T$, dont les expressions sont données ci-dessus (formules F12 et F13), correspondent aux contributions associées au point de chevauchement $A_i$. Pour obtenir le coefficient de raideur longitudinal total $K_{//}$ associé à la force de rappel longitudinale totale entre électrodes, il faut sommer les coefficients de raideur longitudinaux $k_{//}$ individuels pour l'ensemble des points de chevauchement $A_i$. Et il en est de même pour le coefficient de raideur longitudinal total $K_T$ :

$$K_{//} = \sum_{i=1}^{i=2\times M} k_{//} \quad (F14)$$

et

$$K_T = \sum_{i=1}^{i=2\times M} k_T \quad (F15) .$$

Les formules 12 et 13 ci-dessus apportent de nombreuses informations utiles pour optimiser soit le coefficient de raideur longitudinal $k_{//}$, soit le coefficient de raideur transverse $k_T$, pour chacun des points de chevauchement.

Caractéristiques du coefficient de raideur longitudinal $k_{//}$.

La formule F12 montre que le coefficient de raideur longitudinal $k_{//}$ est nul lorsque $\beta=0$ ou lorsque $\beta=\alpha$, c'est-à-dire lorsque la direction de déplacement d est parallèle soit au bord $b_{21}$ de la première électrode, soit au bord $b_{22}$ de la deuxième électrode, au point de chevauchement considéré (en l'occurrence le point $A_2$, sur la figure 5).

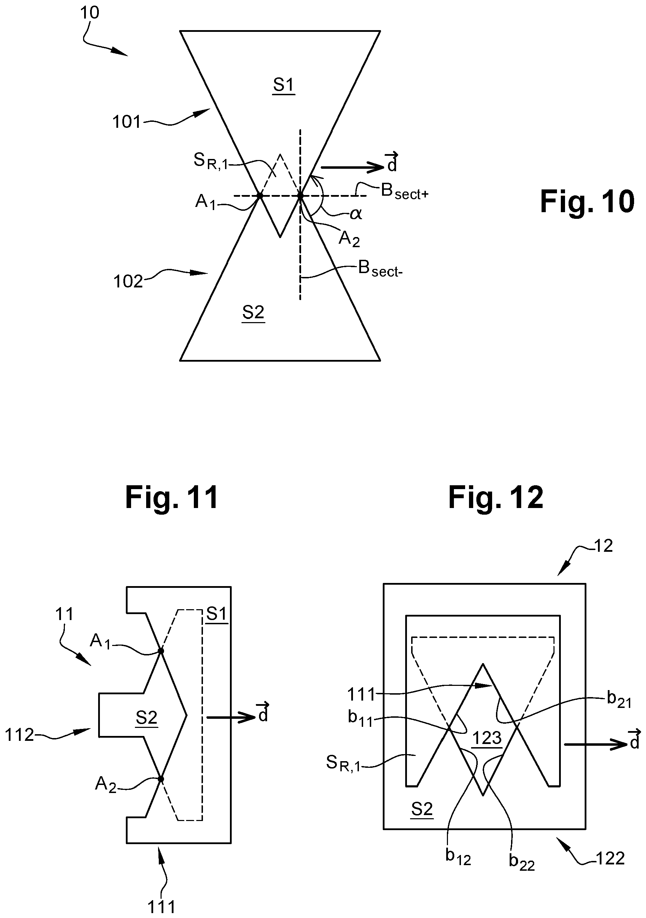

Par ailleurs, pour un angle $\alpha$ donné (fixe) entre les bords respectifs des deux surfaces libres S1 et S2, on montre, à partir de la formule F12 que le coefficient de raideur longitudinal $k_{//}$ a une valeur absolue maximale soit lorsque $\beta=\alpha/2$, soit lorsque $\beta=(\pi+\alpha)/2$. Ces deux cas correspondent tous les deux à une situation dans laquelle la direction de déplacement d est parallèle à l'une des deux bissectrices $B_{sect+}$, $B_{sect-}$ définies entre les bords $b_{i1}$ et $b_{i2}$ des deux électrodes (voir les figures 6 et 10, par exemple).

En l'occurrence, lorsque la direction de déplacement d est parallèle à la bissectrice $B_{sect+}$ du secteur angulaire « sans recouvrement » (i.e. : dans lequel il n'y a pas de recouvrement entre les deux électrodes), délimité par les bords respectifs $b_{i1}$ et $b_{i2}$ des deux surfaces libres S1 et S2, alors, le coefficient de raideur longitudinal $k_{//}$ est positif. Cette situation correspond au cas des figures 10 à 12 (pour lesquelles i=1 ou 2, selon le point de chevauchement, A1 ou A2, considéré). Dans cette situation, $\beta=\alpha/2$ (pour mémoire, l'ouverture angulaire du secteur angulaire « sans recouvrement » est $\alpha$). On pourra noter que la droite $B_{sect+}$ est à la fois la bissectrice du secteur angulaire « sans recouvrement » défini par les bords respectifs des deux électrodes, mais qu'il s'agit aussi de la bissectrice du secteur angulaire défini par ces bords et dans lequel les électrodes se superposent l'une à l'autre (voir la figure 5 par exemple).

Le fait que le coefficient de raideur longitudinal $k_{//}$ soit positif signifie que la force correspondante est une force de rappel (force tendant à ramener la deuxième électrode à la position de référence mentionnée plus haut). Pouvoir introduire ainsi un coefficient de raideur longitudinal $k_{//}$ positif est intéressant en pratique, dans un système de type MEMS pourvu de ressorts mécaniques. En effet, cela permet d'augmenter, d'une quantité réglable électriquement, la raideur totale (mécanique + électrostatique) entre les pièces reliées par les ressorts en question (i.e. : d'ajuster à la hausse cette raideur totale).

A contrario, lorsque le coefficient de raideur longitudinal $k_{//}$ est négatif, on peut ajuster à la baisse (de manière électrique) la raideur totale entre les pièces reliées par les ressorts en question. Lorsque la direction de déplacement d est parallèle à la bissectrice $B_{sect-}$ d'un secteur angulaire, délimité par les bords respectifs $b_{21}$ et $b_{22}$ (ou $b_{11}$ et $b_{12}$) des deux surfaces libres S1 et S2, et dans lequel se trouve une seule des deux électrodes 41, 42, alors, le coefficient de raideur longitudinal $k_{//}$ est négatif. Cette situation correspond au cas $\beta=(\pi+\alpha)/2$. Il s'agit par exemple de la situation des figures 6 à 9, 13 et 14.

Lorsque la direction de déplacement d est parallèle à l'une des deux bissectrices $B_{sect+}$, $B_{sect-}$, le coefficient de raideur longitudinal $k_{//}$ a une valeur absolue maximale (du point de vue de sa variation avec l'orientation de la direction de déplacement d). Cette valeur dépend toutefois de l'angle $\alpha$ entre les bords respectifs des deux surfaces libres S1 et S2.

En l'occurrence, lorsque d est parallèle à la bissectrice $B_{sect+}$ (cas dans lequel $k_{//}$ est positif, correspondant par exemple à la figure 10), c'est pour $\alpha=120$ degrés que le coefficient de raideur longitudinal $k_{//}$ est le plus grand.

Et lorsque la direction de déplacement d est parallèle à la bissectrice $B_{sect-}$ (cas dans lequel $k_{//}$ est négatif, correspondant par exemple à la figure 6), c'est pour $\alpha=60$ degrés que la valeur absolue du coefficient de raideur longitudinal $k_{//}$ est la plus grande.

Ainsi que ce soit dans le cas $k_{//}$ positif, ou $k_{//}$ négatif, la valeur absolue du coefficient de raideur longitudinal $k_{//}$ est maximale lorsque :

- la direction de déplacement d est parallèle à l'une des deux bissectrices $B_{sect-}$ et $B_{sect+}$, et lorsque

- le secteur angulaire, délimité par les bords respectifs $b_{21}$, $b_{22}$ (ou $b_{11}$, $b_{12}$) des deux surfaces libres S1 et S2 et dans lequel se trouve ladite direction de déplacement d, a une ouverture angulaire de 120 degrés (on notera en effet que cela correspond à la fois à la situation de la figure 6, et à celle de la figure 10).

Dans cette situation (qui est celle des figures 6 à 14), la valeur absolue du coefficient de raideur longitudinal $k_{//}$ (associé à un point de chevauchement) vaut :

$$\left| k_{//} \right| = \frac{V_0^2 . \varepsilon_0}{g} . \frac{3\sqrt{3}}{16} \approx 0.32 \times \frac{V_0^2 . \varepsilon_0}{g} \quad (F16).$$

Caractéristiques du coefficient de raideur transverse $k_T$.

A partir de la formule F13, on peut montrer :

- que le coefficient de raideur transverse $k_T$ est nul lorsque la direction de déplacement d est parallèle à l'une des bissectrices $B_{sect+}$, $B_{sect-}$ (alors que, au contraire, le coefficient de raideur longitudinal $k_{//}$ est maximal, dans cette situation), et

- que sa valeur absolue $|k_T|$ est maximale lorsque la direction de déplacement d est telle que $\beta=\pi/4+\alpha/2$, ou $-\pi/4+\alpha/2$.

Lorsque $\beta=\pi/4+\alpha/2$, ou $-\pi/4+\alpha/2$, c'est-à-dire lorsque la direction de déplacement est choisie pour maximiser $|k_T|$, on a $|a_T|=|\sin(\alpha)|/4$, qui est maximal pour $\alpha-\pi/2$.

La situation qui permet d'obtenir le plus grand coefficient de raideur transverse $k_T$ (en valeur absolue) correspond donc à une situation dans laquelle :

- au point de chevauchement Ai considéré, les bords respectifs $b_{i1}$, $b_{i2}$ des deux surfaces libres S1 et S2 sont perpendiculaires l'un à l'autre ($\alpha=\pi/2$), et dans laquelle

- la direction de déplacement d est parallèle à l'un des bords en question, $b_{i1}$, $b_{i2}$ (en effet, $\beta$ vaut $\pi/4+\alpha/2$ ou $-\pi/4+\alpha/2$, et est donc égal à $\pi/2$ ou 0, dans cette situation).

Cette configuration, optimale du point de vue de la raideur transverse, est celle des figures 15 à 18. On notera que, dans cette configuration, $|k_T|$ est maximale tandis que $k_{//}$ est nul. Il s'agit donc d'une configuration permettant d'introduire une raideur purement transverse. Dans cette configuration, la valeur absolue du coefficient de raideur transverse $k_T$ (associé à un point de chevauchement) vaut :

$$|k_T| = \frac{V_0^2 . \varepsilon_o}{g} . \frac{1}{4} = 0.25 \times \frac{V_0^2 . \varepsilon_o}{g} \quad (F17).$$

Différentes configurations d'électrodes intéressantes en pratique, déterminées sur la base des résultats généraux donnés ci-dessus, sont présentées maintenant.

Un premier type de configuration, permettant d'obtenir un coefficient de raideur longitudinal $K_{//}$ élevé (en valeur absolue) associé à un coefficient de raideur transverse $K_T$ faible voire nul, est présentée tout d'abord.

Un deuxième type de configuration, permettant d'obtenir un coefficient de raideur transverse $K_T$ élevé (en valeur absolue) associé à un coefficient de raideur longitudinal $K_{//}$ faible voire nul, est présentée ensuite.

Premier type de configuration : optimisation du coefficient de raideur longitudinal $K_{//}$.

Il est intéressant en pratique, lors de l'ajustement électrique d'un coefficient de raideur longitudinal total (associé à une force de rappel totale exercée sur une pièce mobile), d'éviter d'introduire un coefficient de raideur transverse. Pour cela, il faut que les deux électrodes du dispositif de condensateur à surface variable soient configurées de manière à obtenir un coefficient de raideur longitudinal $K_{//}$ élevé (en valeur absolue), tout en obtenant un coefficient de raideur transverse $K_T$ nul, ou tout au moins faible devant $K_{//}$.

Pour que le coefficient de raideur transverse $K_T$ (c'est-à-dire le coefficient de raideur transverse total d'origine électrostatique) soit nul, ou tout au moins faible, une solution consiste à configurer et orienter les électrodes de manière à ce que, en chaque point de chevauchement $A_1$, $A_2$, ... $A_i$, ... $A_{2M}$, la direction de déplacement d soit parallèle à l'une des bissectrices $B_{sect+}$, $B_{sect-}$, au point de chevauchement considéré.

En effet, dans ce cas, pour chaque point de chevauchement, on a $k_T=0$, si bien que la somme $K_T$ des coefficients individuels $k_T$ est alors nulle elle aussi.

C'est cette solution qui est mise en oeuvre dans les dispositifs des figures 6 et 9 à 14. Elle est d'autant plus intéressante qu'elle permet en même temps de maximiser la valeur absolue du coefficient de raideur longitudinal $K_{//}$.

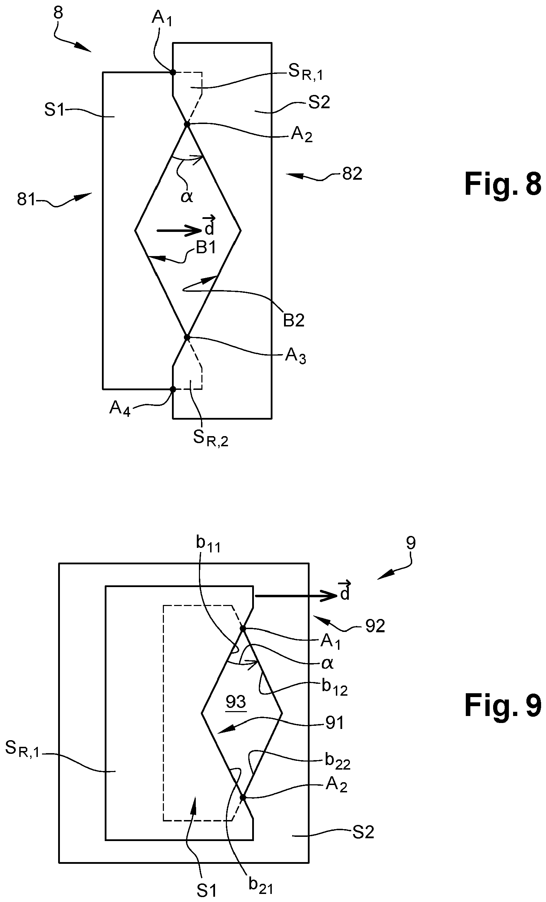

Le coefficient de raideur transverse $K_T$ (qui est le coefficient de raideur transverse total d'origine électrostatique) peut aussi être rendu nul ou faible, en utilisant une compensation des contributions associées respectivement aux différents points de superposition. Par exemple, dans le cas du dispositif 8 (voir la figure 8), le coefficient de raideur transverse individuel $k_T$ associé au point A1 est non nul, de même que celui associé au point A4, mais leur somme est nulle. Plus généralement, on peut exploiter ainsi une symétrie des différentes zones de croisement entre bordures pour obtenir, par compensation, un coefficient de raideur transverse $K_T$ nul, ou tout au moins faible.

Quoiqu'il en soit, pour que le coefficient de raideur longitudinal $K_{//}$ soit élevé (en valeur absolue), et que le coefficient de raideur longitudinal $K_T$ soit nul ou faible, on pourra mettre en oeuvre l'une des caractéristiques suivantes, ou les deux :

- en chaque point de chevauchement $A_1$, $A_2$, ... $A_i$, ... $A_{2M}$ (ou tout au moins en certains de ces points), la direction de déplacement d est parallèle à la bissectrice $B_{sect+}$, $B_{sect-}$ de l'un des secteurs angulaires délimités par le bord de la première surface S1 d'une part, et par le bord de la deuxième surface S2 d'autre part, à plus ou moins 15 degrés près, voire à plus ou moins 5 degrés près ; cela permet de minimiser voire d'annuler $K_T$, tout en maximisant $|K_{//}|$ ;

- en chaque point de chevauchement $A_1$, $A_2$, ... $A_i$, ... $A_{2M}$ (ou tout au moins en certains de ces points), un secteur angulaire, délimité par le bord de la première surface S1 et par le bord de la deuxième surface S2, et dans lequel se trouve la direction de déplacement d, a une ouverture angulaire de 120 degrés, à plus ou moins 15 degrés près, voire à plus ou moins 5 degrés près ; cela contribue à rendre $|K_{//}|$ la plus grande possible.

Chacune des variantes de réalisation du dispositif, 6 et 8 à 14 (représentées respectivement sur les figures 6 et 8 à 14), présente les deux caractéristiques ci-dessus.

On remarquera d'ailleurs que, dans ces différentes variantes de réalisation, on peut remplir les deux conditions en question (et ainsi maximiser $|K_{//}|$) du fait que, au niveau de chaque surface de recouvrement élémentaire, que les deux bords $b_{11}$ et $b_{21}$ qui délimitent la première surface S1 sont non parallèles entre eux, les deux bords $b_{12}$ et $b_{22}$ qui délimitent la deuxième surface S2 étant eux aussi non parallèles entre eux. En d'autres termes, chacune des deux électrodes a deux bords inclinés l'un par rapport à l'autre, dans la zone de recouvrement des électrodes (on notera d'ailleurs que si l'une des électrodes était délimitée par une unique bordure entièrement rectiligne, comme dans l'art antérieur précité, alors, on ne pourrait satisfaire les deux conditions de maximisation précitées et la valeur de $|K_{//}|$ serait plus petite que celle obtenue ici).

Les deux caractéristiques mentionnées plus haut (grâce auxquelles son maximise $|K_{//}|$) peuvent par exemple être obtenues en donnant aux première et deuxième électrodes 61, 62 ; 101 ; 102 une forme de triangle, avec un angle au sommet de 120 degrés ou de 60 degrés, comme dans le cas des figures 6 et 10. Ces deux caractéristiques peuvent aussi être obtenues lorsque les première et deuxième électrodes sont pourvues chacune d'une rangée de dents triangulaires dont chaque dent a un angle au sommet de 120 degrés, ou de 60 degrés, comme dans le cas de la figure 13.

Bien d'autres formes d'électrodes (autres que des formes triangulaires ou trapézoïdales) permettent aussi de remplir ces deux conditions, comme on peut le voir sur les figures 9 ou 11 par exemple.

Comme indiqué plus haut, dans le dispositif 6 de condensateur à surface variable de la figure 6, la première surface S1 (surface libre de la première électrode 61) a une forme de triangle. Au sommet O1 de ce triangle, la première surface S1 a une ouverture angulaire de 120 degrés. De même, la deuxième surface S2 (surface libre de la première électrode 62) a une forme de triangle. Au sommet 02 de ce triangle, la deuxième surface S2 a une ouverture angulaire de 120 degrés. Les première et deuxième surfaces se superposent au niveau de leurs sommets O1 et 02. Les première et deuxième électrodes 61, 62 sont positionnées l'une par rapport à l'autre de manière à ce que

- la bissectrice du triangle formé par la surface S1, qui passe par son sommet O1, et

- la bissectrice du triangle formé par la surface S2, qui passe par son sommet 02

soient parallèles l'une avec l'autre, et soient parallèles à la direction de déplacement d.

Dans cette configuration, l'angle $\alpha$ (angle su secteur angulaire sans recouvrement) est égal à 60 degrés. On remarquera que, dans cette configuration, au premier point de chevauchement $A_1$ :

- l'angle entre le premier bord $b_{11}$ de la première surface S1 et le premier bord $b_{12}$ de la deuxième surface S2 est égal à 120 degrés, dans le secteur angulaire contenant la direction de déplacement d, et

- la direction de déplacement d est parallèle à la bissectrice $B_{sect-}$ de ce secteur angulaire.

De même, au deuxième point de chevauchement $A_2$ :

- l'angle entre le deuxième bord $b_{21}$ de la première surface S1 et le deuxième bord $b_{22}$ de la deuxième surface S2 est égal à 120 degrés, dans le secteur angulaire contenant la direction de déplacement d, et
- la direction de déplacement d est parallèle à la bissectrice $B_{sect-}$ de ce secteur angulaire.

Les deux conditions de maximisation mentionnées plus haut sont donc bien vérifiées. Le coefficient de raideur longitudinal $K_{//}$ (coefficient de raideur longitudinal total d'origine électrostatique) vaut donc :

$$K_{//} = -2 \times \frac{V_0^2.\varepsilon_0}{g} . \frac{3\sqrt{3}}{16} \approx -0.64 \times \frac{V_0^2.\varepsilon_0}{g}$$

tandis que le coefficient de raideur transverse $K_T$ est nul.

La figure 7 représente le dispositif 6 de la figure 6, mais vu de côté, au lieu d'être vu de dessus.

Dans le dispositif 8 de condensateur à surface variable de la figure 8, les première et deuxième surfaces S1 et S2 (surfaces libres des première et deuxième électrodes 81 et 82) ont en quelque sorte une forme triangulaire, mais en creux, avec une bordure B1, B2 en forme de M.

Chacune de ces surfaces S1, S2 se superpose à l'autre au niveau des deux pointes supérieures du M. On a donc deux surfaces de recouvrement élémentaires $S_{R,1}$ et $S_{R,2}$, ici. Par ailleurs, pour les deux surfaces S1 et S2, le secteur angulaire vide (creux), correspondant à la pointe inférieure (en V) du M que forme la bordure B1, B2, a une ouverture de 120 degrés. Chacune de ces deux surfaces S1, S2 est symétrique par rapport à un axe parallèle à la direction de déplacement d.

Pour la surface de recouvrement élémentaire $S_{R,1}$, au premier point de chevauchement $A_1$, le coefficient $k_{//}$ est nul (car la direction de déplacement d est parallèle au bord de la première surface S1). Et au deuxième point de chevauchement $A_2$, le coefficient $k_{//}$ vaut $-\frac{V_0^2.\varepsilon_0}{g}.\frac{3\sqrt{3}}{16}$ (et l'angle $\alpha$ vaut 60 degrés). De même, pour la surface de recouvrement élémentaire $S_{R,2}$, au point de chevauchement $A_3$, le coefficient $k_{//}$ vaut $-\frac{V_0^2.\varepsilon_0}{g}.\frac{3\sqrt{3}}{16}$, et au point de chevauchement $A_4$, le coefficient $k_{//}$ est nul.

Finalement, pour cette structure, le coefficient de raideur longitudinal $K_{//}$ vaut donc $K_{//} = -2 \times \frac{V_0^2.\varepsilon_0}{g} . \frac{3\sqrt{3}}{16} \approx -0.64 \times \frac{V_0^2.\varepsilon_0}{g}$. Quant au coefficient de raideur transverse $K_T$, il est nul (les contributions des points de chevauchement A2 et A3 sont nulles, et celles des points de chevauchement A1 et A4 sont opposées, et se compensent l'une avec l'autre).

Le dispositif 9 de condensateur à surface variable de la figure 9 est similaire à celui de la figure 8. La première électrode 91 est quasiment identique à la première électrode 81 du dispositif 8 de la figure 8. En revanche, dans le dispositif 9, la deuxième électrode 92 a une forme creuse, une ouverture 93 (entièrement entourée par la deuxième surface S2) étant pratiquée dans celle-ci. Les deux bords $b_{12}$, $b_{22}$ de la deuxième surface S2, inclinés l'un par rapport à l'autre (pour obtenir une variation de la surface de recouvrement $S_{R,1}$ lors du déplacement des électrodes), correspondent à deux bords de cette ouverture 93. L'électrode 92, creuse, est particulièrement robuste d'un point de vue mécanique. Par ailleurs, cette structure peut s'avérer commode à réaliser, en termes de fabrication (par exemple lorsqu'une des électrodes, fixe, est située sous une masse d'épreuve, en quelque sorte enterrée sous celle-ci).

Dans le dispositif 9, les deux bords $b_{12}$, $b_{22}$ de la deuxième surface S2 (inclinés l'un par rapport à l'autre, et qui croisent les deux bords $b_{11}$, $b_{21}$ de la première surface S1), forment entre eux un angle de 120 degrés (dans le secteur angulaire « vide », qui englobe l'ouverture 93). Les deux bords $b_{12}$, $b_{22}$ délimitent aux aussi un secteur angulaire « vide » ayant une ouverture de 120 degrés.

Dans le cas de la figure 9, les valeurs des coefficients $K_{//}$ et $K_T$ sont les mêmes que pour les dispositifs des figures 6 et 8.

Les dispositifs 10 à 12, représentés respectivement sur les figures 10 à 12 sont des dispositifs de condensateurs à surface variable similaires à ceux des figures 6 à 9, mais dans lesquels le coefficient de raideur longitudinal $K_{//}$ est positif, au lieu d'être négatif.

Dans le dispositif 10 de la figure 10, la première surface S1 (surface libre de la première électrode 101) a une forme de triangle. Au sommet O1 de ce triangle, la première surface S1 a une ouverture angulaire de 60 degrés. De même, la deuxième surface S2 (surface libre de la première électrode 102) a une forme de triangle. Au sommet 02 de ce triangle, la deuxième surface S2 a elle aussi une ouverture angulaire de 60 degrés. Les première et deuxième surfaces se superposent au niveau de leurs sommets O1 et 02. Les première et deuxième électrodes 101, 102 sont positionnées l'une par rapport à l'autre de manière à ce que la bissectrice du triangle formé par la surface S1 et qui passe par son sommet O1 soit parallèle à la bissectrice du triangle formé par la surface S2 et qui passe par son sommet 02. La direction de déplacement d est perpendiculaire aux bissectrices de ces deux triangles. L'ouverture angulaire $\alpha$ du secteur angulaire « sans recouvrement » délimité par les bords respectifs des deux surfaces S1 et S2, est égal à 120 degrés.

Dans cette configuration, le coefficient de raideur longitudinal $K_{//}$ vaut :

$$K_{//} = 2 \times \frac{V_0^2 . \varepsilon_0}{g} . \frac{3\sqrt{3}}{16} \approx 0.64 \times \frac{V_0^2 . \varepsilon_0}{g}$$

tandis que le coefficient de raideur transverse $K_T$ est nul.

Dans le dispositif 11 de la figure 11, la bordure B1 de la première électrode 111 a globalement la forme d'un M (comme dans le dispositif de la figure 8). Les deux bords $b_{11}$, $b_{21}$ de la surface libre S1 de cette électrode, qui (en projection sur S1) croisent les deux bords $b_{12}$, $b_{22}$ de la surface libre S2 de la deuxième électrode 112, délimitent entre eux un secteur angulaire « vide » ayant une ouverture de 120 degrés (les deux bords $b_{11}$, $b_{21}$ forment la partie en « V » de la bordure B1 en forme de M de S1). Les deux bords $b_{21}$, $b_{22}$ de la surface libre S2 délimitent quant à eux un secteur angulaire « plein » (occupé par la deuxième électrode), ayant également une ouverture angulaire de 120 degrés. Au premier point de chevauchement $A_1$, les bords $b_{11}$ et $b_{12}$ des deux surfaces S1 et S2 délimitent un secteur angulaire « sans chevauchement » ayant une ouverture de 120 degrés, et dans lequel se trouve la direction de déplacement d. De même, au deuxième point de chevauchement $A_2$, les bords $b_{21}$ et $b_{22}$ des deux surfaces S1 et S2 délimitent un secteur angulaire « sans chevauchement » ayant une ouverture de 120 degrés, et dans lequel se trouve la direction de déplacement d. Dans cette configuration, le coefficient de raideur longitudinal $K_{//}$ est positif, et a la même valeur que dans le cas de la figure 10.

Le dispositif 12 représenté sur la figure 12 est similaire au dispositif de la figure 9, mais la direction de déplacement d est perpendiculaire à l'axe de symétrie de chaque électrode 121, 122 (au lieu d'être parallèle à chacun de ces axes de symétrie). Par ailleurs, les deux bords $b_{11}$, $b_{21}$ de la première surface S1, forment entre eux un angle de 60 degrés (au lieu de 120 degrés dans le cas de la figure 9), dans le secteur angulaire « vide » qui englobe l'ouverture 123 pratique dans la deuxième électrode 122. Les deux bords $b_{12}$, $b_{22}$ délimitent aux aussi un secteur angulaire « vide » ayant une ouverture de 60 degrés (au lieu des 120 degrés du dispositif de la figure 9).

De même que pour le dispositif de la figure 10, le coefficient de raideur longitudinal $K_{//}$ vaut alors

$$K_{//} = 2 \times \frac{V_0^2 . \varepsilon_0}{g} . \frac{3\sqrt{3}}{16} \approx 0.64 \times \frac{V_0^2 . \varepsilon_0}{g}$$ tandis que le coefficient de raideur transverse $K_T$ est nul.

Dans les dispositifs de condensateur à surface variable des figures 6 à 12, la zone de superposition entre électrodes est formée d'une seule, ou au maximum de deux surfaces de recouvrement élémentaires. Pour augmenter le coefficient de raideur longitudinal $K_{//}$, on peut prévoir de répéter plusieurs fois le motif correspondant à cette surface de recouvrement élémentaire.

Ainsi, dans le cas de la figure 13 par exemple, chaque électrode 131, 132 comprend une rangée de M dents triangulaires. Chacune de ces dents est similaire à la pointe de l'électrode 61 ou 62 du dispositif de la figure 6. Le long de sa bordure B1, la surface S1 présente ainsi une suite de triangles isocèles de 120 degrés d'ouverture, répétés périodiquement le long la bordure B1. Il en est de même de la bordure B2.

Cette configuration permet d'obtenir un coefficient de raideur longitudinal $K_{//}$ dont la valeur absolue vaut

$$|K_{//}| = M \times 2 \times \frac{V_0^2 . \varepsilon_0}{g} . \frac{3\sqrt{3}}{16} .$$

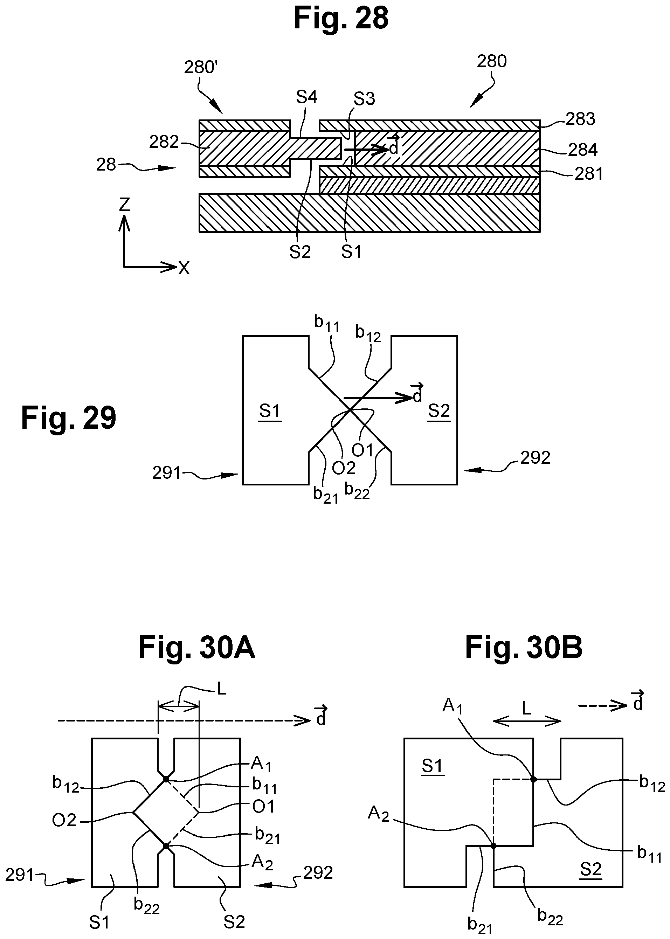

En termes d'ordres de grandeur, en pratique, on peut réduire la valeur du gap g jusqu'à 0,1 micron environ (cet ordre de grandeur a l'avantage d'être assez facilement réalisable en pratique ; le gap g peut toutefois prendre des valeurs plus petites, si besoin). Pour obtenir une variation linéaire de la force électrostatique entre électrodes, en fonction du déplacement r, il est souhaitable que chaque dent ait une dimension de plusieurs fois le gap g (pour limiter les effets de bords ; voir la figure 29). A titre d'exemple, on peut considérer que chaque dent triangulaire occupe 1 ou 2 microns de long, le long de l'électrode 131, 132. Pour un MEMS dont les dimensions latérales sont de quelques centaines de microns (typiquement entre 100 et 500 microns), on peut donc placer une centaine de dents le long de chaque électrode. Pour g = 0,1 micron, M=100 et Vo=10 volts, on trouve alors $|K_{//}|$ ~ 0,6 Newton/mètre. Or, dans un dispositif de type MEMS, les coefficients de raideur d'origine mécanique, dus aux ressorts de rappel qui maintiennent les masses mobiles, sont typiquement de 1 Newton/mètre environ, en ordre de grandeur, pour un accéléromètre, et de 100 Newtons/mètre environ, en ordre de grandeur, pour un gyromètre.

Dans un dispositif de condensateur à surface variable, tel que celui de la figure 13 par exemple, on peut donc obtenir un coefficient de raideur d'origine électrostatique, réglable électriquement, dont l'ordre de grandeur est bien adapté pour ajuster sur une large plage un coefficient de raideur total d'un accéléromètre par exemple, somme d'un coefficient d'origine mécanique, et du coefficient d'origine électrostatique (puisqu'on peut atteindre, pour le coefficient d'origine électrostatique, un ordre de grandeur comparable à celui du coefficient d'origine mécanique). Cette technologie est donc bien adaptée pour ajuster la sensibilité d'un accéléromètre. En effet, il est possible de quasiment annuler le coefficient de raideur total (puisqu'on peut atteindre, pour le coefficient d'origine électrostatique, un ordre de grandeur comparable à celui du coefficient d'origine mécanique). Comme la sensibilité est inversement proportionnelle à la raideur effective, elle peut donc augmenter ainsi très fortement la sensibilité de l'accéléromètre. Cette technologie est bien adaptée également pour accorder électriquement les fréquences d'oscillation propres de deux cadres mobiles d'un gyromètre, par exemple. En effet, les imperfections de fabrication mentionnées plus haut sont à l'origine de déséquilibres de raideur entre les deux cadres qui sont typiquement de l'ordre de 1%, et qui sont donc la gamme de réglage accessible avec le dispositif de condensateur à surface variable en question.

Dans le dispositif 14 de condensateur à surface variable de la figure 14, chaque électrode 141, 142 comprend une rangée de M ouvertures triangulaires 143, 144 (ces deux rangées d'ouvertures sont parallèles l'une à l'autre, et perpendiculaires à la direction de déplacement d). Chacune de ces ouvertures a la forme d'un triangle isocèle ayant un angle au sommet de 120 degrés. Ces ouvertures se chevauchent l'une l'autre au niveau de leurs sommet, ce qui permet d'obtenir $2\times M$ points de chevauchement, et un coefficient de raideur longitudinal $K_{//}$ qui vaut là aussi $K_{//} =$

$$-M \times 2 \times \frac{V_0^2 . \varepsilon_o}{g} . \frac{3\sqrt{3}}{16}$$ (comme pour la figure 13) tandis que le coefficient de raideur transverse $K_T$ est nul.

Deuxième type de configuration : optimisation du coefficient de raideur transverse $K_T$.

Ce deuxième type de configuration permet d'obtenir un coefficient de raideur transverse $K_T$ élevé (en valeur absolue), tout en obtenant un coefficient de raideur longitudinal $K_{//}$ nul, ou tout au moins faible devant $K_T$.

Pour que le coefficient de raideur longitudinal $K_T$ soit élevé (en valeur absolue), tout en obtenant un coefficient de raideur longitudinal $K_{//}$ nul, ou tout au moins faible devant $K_T$, on pourra mettre en oeuvre l'une des caractéristiques suivantes, ou les deux :

- en chaque point de chevauchement $A_1$, $A_2$, ... $A_i$, ... $A_{2M}$ (ou tout au moins en certains de ces points), un secteur angulaire, délimité par le bord de la première surface S1 et par le bord de la deuxième surface S2, a une ouverture angulaire $\alpha$ de 90 degrés, à plus ou moins 15 degrés près, voire à plus ou moins 5 degrés près ;

- en chaque point de chevauchement $A_1$, $A_2$, ... $A_i$, ... $A_{2M}$ (ou tout au moins en certains de ces points), la direction de déplacement d est parallèle au bord ($b_{11}$, $b_{12}$, $b_{21}$ ou $b_{22}$) de l'une des première et deuxième surfaces S1, S2, à plus ou moins 15 degrés près, voire à plus ou moins 5 degrés près ; cela permet de minimiser voire d'annuler $|K_{//}|$, tout en maximisant $|K_T|$.

Chacune des variantes de réalisation du dispositif, 15 à 18 (représentées respectivement sur les figures 15 à 18), présente les deux caractéristiques ci-dessus.

Pour remplir ces deux conditions, on peut prévoir en particulier que chacune des deux surfaces S1 et S2 soit délimitée, dans la zone de superposition entre électrodes, par deux bords perpendiculaires entre eux, à plus ou moins 15 degrés près, voire à plus ou moins 5 degrés près (voir les figures 15 à 18). Ainsi, à titre d'exemple, chacune des deux surfaces S1 et S2 peut former un coin à angle droit, les deux coins se superposant l'un à l'autre (figure 15).

Dans le dispositif 15 de la figure 15, la première surface S1 comprend une partie formant un coin à angle droit, délimité par les deux bords $b_{11}$ et $b_{21}$. De même, la deuxième surface S2 comprend une partie formant un coin à angle droit, délimité par les deux bords $b_{12}$ et $b_{22}$, perpendiculaires respectivement aux bords $b_{11}$ et $b_{21}$ de la première surface S1. La direction de déplacement d est parallèle aux bords $b_{12}$ et $b_{21}$ (en chaque point de chevauchement $A_1$, $A_2$, elle est donc effectivement parallèle au bord de l'une des surfaces S1, S2).

$$|K_T| = 2 \times \frac{V_0^2 . \varepsilon_o}{g} . \frac{1}{4}$$

Dans cette configuration, on a : , tandis que le coefficient de raideur longitudinal $K_{//}$ est nul.

Dans le dispositif 16 de la figure 16, la première surface S1 est rectangulaire. La deuxième surface S2 présente une découpe à angle droit, qui délimite un secteur angulaire « vide » (i.e. : où ne s'étend pas la deuxième électrode 162) de 90 degrés d'ouverture angulaire. Cette découpe se superpose à l'un des coins du rectangle formé par la première surface S1. Dans cette configuration, la valeur absolue du coefficient de raideur transverse $K_T$ est la même que pour le dispositif de la figure 15, et le coefficient de raideur longitudinal $K_{//}$ est nul, là aussi.

Dans le dispositif 17 de la figure 17, la première surface S1 comprend un îlot 173 en forme de rectangle, qui se raccorde au reste de la première électrode 171 au niveau de l'un des sommets du rectangle en question. La deuxième surface S2 est la même que dans le dispositif de la figure 17, et elle recouvre l'ensemble de l'ilot 173 rectangulaire, sauf au niveau de l'encoche à angle droit pratiquée dans la deuxième électrode 172. Les deux bords $b_{12}$, $b_{22}$ de l'encoche sont perpendiculaires respectivement aux deux bords $b_{11}$, $b_{21}$ de l'ilot 173 avec lesquels il y a chevauchement. Dans cette configuration, la valeur absolue du coefficient de raideur transverse $K_T$ est la même que pour le dispositif de la figure 15, et le coefficient de raideur longitudinal $K_{//}$ est nul, là aussi.

Dans le dispositif 18 de la figure 18, la première surface S1 et la deuxième surface S2 ont chacune une bordure B1, B2 en forme de marches d'escalier. Le long de sa bordure B1, B2, la surface en question ainsi, une rangée de M dents, chaque dent ayant une forme de triangle rectangle (triangle à angle droit). Les première et deuxième électrodes 181, 182 sont positionnées l'une par rapport à l'autre de manière à obtenir M surfaces de recouvrement élémentaires, chacune en forme de rectangle. La direction de déplacement d est parallèle à une arrête sur deux de la bordure B1 (et, de même, elle est parallèle à 1 arrête sur deux de la bordure B2). Dans le dispositif 18, un motif de recouvrement semblable à celui de la figure 15 est ainsi répété M fois.

$$|K_T| = M \times 2 \times \frac{V_0^2.\varepsilon_o}{g}.\frac{1}{4}$$

Dans cette configuration, on a : , tandis que le coefficient de raideur longitudinal $K_{//}$ est nul.

Dispositif à trois électrodes, à coefficient de raideur de signe contrôlable.

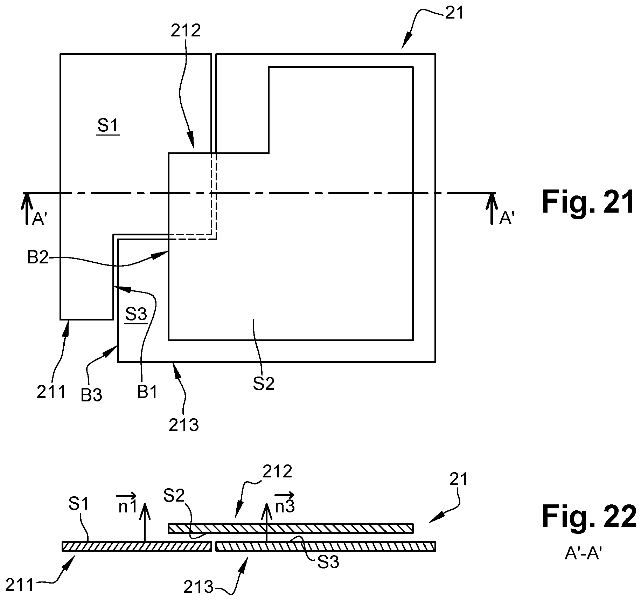

Les dispositifs 19 et 21 de condensateurs à surfaces variables représentés respectivement sur les figures 19 et 21, en vue de dessus, comprennent chacun une troisième électrode 193 ; 213, supplémentaire, dont la tension de polarisation peut être contrôlée indépendamment de celles des première et deuxième électrodes 191, 192 ; 211, 212 mentionnées plus haut.

La figure 20 est une vue de côté du dispositif de la figure 19, en coupe selon un plan A-A. De même, la figure 22 est une vue de côté du dispositif de la figure 21, en coupe selon un plan A'-A'.

Dans ces deux variantes de réalisation, la troisième électrode 193 ; 213 est solidaire de la première électrode 191 ; 211 (il s'agit par exemple de deux électrodes fixes par rapport au substrat). La troisième électrode est délimitée par une troisième surface libre S3, complémentaire de la première surface libre S1 (voir les figures 19 et 21).

Ainsi, la troisième surface S3 a une bordure B3 dont la majeure partie s'étend en vis-à-vis de la bordure B1 de la première surface S1, en longeant la bordure B1. A titre d'exemple, on peut prévoir que chaque portion de la bordure B3 située en vis-à-vis d'une portion de la bordure B1 soit parallèle à cette portion de la bordure B1 (ces deux portions étant séparées l'une de l'autre par un écart constant).

La troisième surface S3 peut en particulier être conformée de manière à ce que l'ensemble regroupant les première et troisième surfaces S1 et S3 couvre une surface d'un seul tenant, mis à part une bande étroite qui s'étend entre les bordures B1 et B3.

La troisième surface S3 est sensiblement parallèle (c'est-à-dire parallèle à plus ou moins 15 degrés près) à la première surface S1 et à la deuxième surface S2. Par ailleurs, ici, les première et troisième surfaces S1 et S3 ont des vecteurs normaux sortants respectifs n1 et n3 dirigés dans le même sens (figures 20 et 22). Ainsi, à titre d'exemple, les première et troisième surfaces S1 et S3 peuvent correspondre toutes deux à des faces supérieures libres des électrodes 191 et 193, tandis que la deuxième surface S2 correspond alors à une face inférieure libre de la deuxième électrode 192, qui recouvre en partie les première et troisième surfaces (figures 20 et 22).

Quoiqu'il en soit, la deuxième surface S2 se superpose en partie à la première surface S1, ainsi qu'à la troisième surface S3.

Dans cette configuration à trois électrodes, en appliquant la tension électrique Vo entre la première électrode et la deuxième électrode, tandis que la tension électrique entre les deuxième et troisième électrodes est nulle, on obtient un premier coefficient de raideur longitudinal $K_{//,1}$, par exemple négatif, et un premier coefficient de raideur transverse $K_{T,1}$, par exemple négatif lui aussi (ou nul).

Au contraire, en appliquant la tension électrique Vo entre la troisième électrode et la deuxième électrode, tandis que la tension électrique entre les première et deuxième électrodes est nulle, on obtient un deuxième coefficient de raideur longitudinal $K_{//,2}$, de signe opposé au premier coefficient de raideur longitudinal $K_{//,1}$, (et donc, par exemple, positif au lieu d'être négatif), du fait du caractère complémentaire des surfaces S1 et S3. De même, on obtient alors un deuxième coefficient de raideur transverse $K_{T,2}$ ayant un signe opposé au premier coefficient de raideur transverse $K_{T,1}$.

Ce dispositif 19 ; 21 à trois électrodes, dont deux complémentaires, permet ainsi de sélectionner électriquement le signe du coefficient de raideur longitudinal et/ou transverse (en polarisant soit le couple première-deuxième électrodes, soit le couple deuxième-troisième électrodes). Cette configuration a par ailleurs l'avantage d'être particulièrement compacte, puisqu'on exploite la même bordure B2 de la deuxième électrode pour obtenir aussi bien un coefficient de raideur positif qu'un coefficient de raideur négatif.

Dans le cas du dispositif 19, les premières et deuxième électrodes 191, 192 sont les mêmes que pour le dispositif 13 décrit précédemment. La troisième surface S3 comprend alors une rangée de dents triangulaires, comme la première surface S1. Chacune de ces dents est insérée entre deux dents voisines de la bordure de la première surface S1.

Dans le cas du dispositif 21, les premières et deuxième électrodes 211, 212 sont les mêmes que pour le dispositif 15 décrit précédemment. La troisième électrode 213 présente une encoche à angle droit, dans laquelle vient se loger le coin (à angle droit) de la première électrode 211.

Equilibrage des forces électrostatiques perpendiculaires aux surfaces libres

La force $F_{12}$ subie par la deuxième électrode, du fait de son interaction électrostatique avec la première électrode, a une composante parallèle aux surfaces S1 et S2 (il s'agit de la force de rappel, ou de répulsion mentionnée plus haut). Mais la force $F_{12}$ a aussi une composante $F_Z$ perpendiculaire aux surfaces S1 et S2 (force d'attraction électrostatique entre les deux armatures du condensateur), appelée force verticale dans la suite.

La force verticale Fz peut s'écrire sous la forme $F_Z = F_{Z,o} - K_{zx}.x + B.x^2$, lorsque la direction de déplacement d est parallèle à l'axe X (en se limitant aux termes d'ordre 2 en x), $F_{Z,o}$, $K_{zx}$ et B étant des constantes.

Il peut s'avérer utile en pratique de compenser, c'est-à-dire d'annuler la force verticale Fz, notamment sa composante constante $F_{Z,o}$.

Annuler la force verticale moyenne $F_{Z,o}$ permet d'éviter de mettre inutilement sous contrainte la pièce à laquelle est fixée la deuxième électrode.

Annuler (compenser) le coefficient de couplage longitudinal-vertical $K_{zx}$ peut aussi s'avérer intéressant, notamment dans un gyromètre à deux cadres mobiles, comparable à celui de la figure 1, mais dit « hors plan », configuré pour détecter une rotation autour de l'axe Y (et non autour de l'axe Z).

Les figures 23A, 25A et 28 montrent respectivement trois dispositifs 23, 25 et 28 dans lesquels la force verticale moyenne $F_{Z,o}$, est annulée en introduisant dans le dispositif 23, 25, 28 un deuxième condensateur à surface variable. Par ailleurs, pour les dispositifs 25 et 28, le coefficient de couplage longitudinal-vertical $K_{zx}$ est annulé lui aussi.

Plus précisément, pour chacun de ces trois dispositifs 23, 25, 28 :

- les première et deuxième surfaces libres S1 et S2 forment un premier condensateur à surface variable,

- la première électrode 231, 251, 281 fait partie d'une première pièce 230, 250, 280, qui présente une troisième surface libre S3, en plus de la première surface libre S1,

- la deuxième électrode 232, 252, 282 fait partie d'une deuxième pièce 230', 250', 280', mobile par rapport à la première pièce 230, 250, 280 selon la direction de déplacement d, et qui présente une quatrième surface libre S4, en plus de la deuxième surface libre S2, la quatrième surface libre étant sensiblement parallèle à la troisième surface libre S3 et se superposant en partie à la troisième surface libre S3 pour former avec elle un deuxième condensateur à surface variable.

Par ailleurs, les deuxième et quatrième surfaces S2, S4 de la deuxième pièce 230', 250', 280' ont des vecteurs normaux sortants n2 et n4 respectifs dirigés dans des sens opposés. Le vecteur normal sortant n2 peut par exemple être dirigé vers le bas, tandis que le vecteur normal sortant n4 est alors dirigé vers le haut.

De ce fait, la force électrostatique verticale (attractive) exercée sur la quatrième surface S4 est opposée à la force électrostatique verticale exercée sur la deuxième surface S2, ce qui permet de réduire la force verticale totale subie par la deuxième pièce.

En égalisant les aires de superposition respectives des deux condensateurs (formée respectivement par les surfaces S1 et S2 d'une part, et S3 et S4 d'autre part), ces deux forces verticales s'annulent même l'une avec l'autre (leur somme est nulle), lorsque l'on applique aux deux condensateurs des tensions électriques de même valeur absolue.

Dans le dispositif 23, la deuxième pièce 230' est mobile par rapport au substrat 234 sur lequel est réalisé le dispositif. Il s'agit en quelque sorte d'une masse flottante, par rapport au substrat (figure 24A). Elle est reliée mécaniquement au substrat, ou à des éléments fixes par rapport au substrat par l'intermédiaires de ressorts réalisés par gravure, qui guident le mouvement de la deuxième pièce 230' de manière à ce qu'elle se déplace parallèlement au plan du substrat 234, c'est-à-dire parallèlement au plan (X, Y). La deuxième pièce 230' a une forme allongée. Son axe longitudinal, en l'occurrence l'axe Y, est perpendiculaire à la direction de déplacement d, qui correspond ici à l'axe X.

La deuxième surface S2, présentée par la deuxième pièce 230', comprend une succession de motifs, ici triangulaires. Elle est obtenue en découpant une rangée de dents triangulaires le long de la deuxième pièce 230'. Cette rangée est parallèle à l'axe longitudinal de la deuxième pièce (axe Y).

La quatrième surface S4 comprend elle aussi une succession de motifs triangulaires, obtenue en découpant une rangée de dents triangulaires le long de la deuxième pièce 230'. Les deuxième et quatrième surfaces S2 et S4 sont situées respectivement sur deux côtés opposés de la deuxième pièce 230', par exemple du côté gauche pour la deuxième surface S2, et du côté droit pour la quatrième surface S4. Ces deux rangées de dents occupent ainsi des positions différentes, le long de l'axe X.

La première pièce 230, fixe par rapport au substrat 234, comprend deux parties, qui, sur le substrat, forment deux rebords 239 et 240 ayant chacun une forme allongée le long de l'axe Y. La deuxième pièce 230', mobile, est située entre ces deux rebords fixes. En l'occurrence, le premier rebord 239 est située en face du premier côté de la deuxième pièce 230' (du côté de la surface S2), alors que le deuxième rebord 240 est situé de l'autre côté de la deuxième pièces 230, en face du deuxième côté de cette pièce (du côté de la surface S4).

La première surface S1 est obtenue en découpant (en gravant) une rangée de dents triangulaires le long du premier rebord 239. La troisième surface S3 est obtenue quant à elle en découpant une rangée de dents triangulaires le long du deuxième rebord 240.

Dans le dispositif 23, les aires de superposition respectives des deux condensateurs (formés par S1 et S2 pour l'un, et par S3 et S4 pour l'autre) sont égales l'une à l'autre pour la position de référence x=0, si bien que l'on annule la force verticale moyenne $F_{Z,o}$. Pour ce dispositif, le coefficient B est nul lui aussi.

Le dispositif 23 est réalisé ici par des techniques planaires : dépôts de couches parallèles au substrat 234, lithographie, et gravure par attaque chimique ou physico chimique sélective (gravure sèche par un plasma réactif, de type RIE et DRIE).

Il est réalisé ici à partir d'un support de type SOI (« Silicium On Insulator »). Initialement, ce support de type SOI est formé du substrat en silicium 234, recouvert d'une couche isolante en silice $SiO_2$, elle-même recouvert d'une couche de silicium.

La deuxième pièce 230' est rendue mobile par rapport au substrat 234 en attaquant la partie de la couche isolante située sous la deuxième pièce 230' de manière chimique (attaque à l'acide fluorhydrique HF). Cette attaque chimique est réalisée sélectivement sous la deuxième pièce 230', mais pas sous la première pièce 230 grâce à des trous de libération, traversant, gravés dans la deuxième pièce (mais pas dans la première pièce).

Les premier et deuxième rebords 239, 240 de la première pièce 230, ainsi que la deuxième pièce 230' ont alors une structure en couches.

Le premier rebord 239 comprend par exemple :

- une couche isolante 235 en silice qui s'étend contre le substrat 234, et

- sur cette couche isolante : une première 231, puis une deuxième couche 236 en silicium.

Dans ce dispositif 23, la première électrode est formée par cette première couche 231 en silicium.

Cette première couche 231, ainsi que la couche isolante 235 qui la supporte s'étendent, parallèlement au substrat, au-delà de la bordure de la deuxième couche 236 : vues en coupe (selon un plan de coupe parallèle au plan Z, X) ces deux couches 235, 231 forment une marche d'escalier (figure 24A). Une partie de la deuxième pièce 230' qui, sur le premier côté de la deuxième pièce 230', forme un surplomb (c'est-à-dire une avancée), vient se superposer au-dessus de cette marche d'escalier. C'est cette partie en marche d'escalier qui est gravées latéralement pour former une rangée de dents triangulaire le long du premier rebord (voir la vue de dessus du dispositif, sur la figure 23A).

La surface S1 est la face supérieure libre de la première couche 231 (face du dessus de la marche d'escalier). Quant à la surface S2, il s'agit de la face inférieure libre de la partie en surplomb de la deuxième pièce 230'.

Le deuxième rebord 240 comprend lui aussi :

- une couche isolante 235' en silice qui s'étend contre le substrat 234, et

- sur cette couche isolante : une première 237, puis une deuxième couche 238 en silicium.

La deuxième couche 238 s'étend, parallèlement au substrat, au-delà de la bordure de la première couche 237. Elle forme ainsi un surplomb (figure 24A). Ce surplomb vient se superposer au-dessus d'une partie de la deuxième pièce 230' qui, sur le deuxième côté de la deuxième pièce 230', forme saillie en marche d'escalier. C'est cette partie en surplomb qui est gravées latéralement pour former une rangée de dents triangulaire le long du deuxième rebord 240.

La surface S3 est la face inférieure libre de cette partie en surplomb de la deuxième couche 238, tandis que la surface S4 est la face supérieure libre de la saillie en marche d'escalier que présente la deuxième pièce 230', le long de de son deuxième côté.

Quant à la deuxième pièce 230', elle comprend une couche inférieure 233 et une couche supérieure 232, en silicium, ici appliquées l'une contre l'autre. Sur le premier côté de la deuxième pièce 230', la couche supérieure 232 s'étend au-delà de la couche inférieure 233, en porte-à-faux, pour former la partie en surplomb mentionnée plus haut. Sur le deuxième côté de la deuxième pièce 230', la couche inférieure 233 s'étend au-delà de la bordure de la couche supérieure pour former la partie en marche d'escalier mentionnées précédemment, également en porte-à-faux. Les couches inférieure et supérieures 233, 232 forment ainsi deux blocs décalés latéralement l'un par rapport à l'autre dans la direction X, ici. La deuxième électrode comprend la couche supérieure 232 (en fait, la deuxième électrode comprend à la fois la couche supérieure et la couche inférieure, ici).

Les premières couches 231, 237 des premier et deuxième rebords 239, 240, ainsi que la couche inférieure 233 de la deuxième pièce 230' correspondent à trois portions différentes de la couche supérieure (en silicium) du support de type SOI, couche qui est initialement d'un seul tenant qui est gravée pour délimiter latéralement ces trois couches 231, 237 et 233.

De même, les couches isolantes 235 et 235' des premier et deuxième rebords 239, 240 correspondent à deux portions différentes de la même couche isolante en silice du support SOI. Cette couche isolante qui est initialement d'un seul tenant. Comme indiqué plus haut, on retire la partie de cette couche isolante située sous la deuxième pièce 230' par attaque chimique sélective, pour rendre cette pièce mobile.

Les deuxièmes couches 236, 238 des premier et deuxième rebords 239, 240, ainsi que la couche supérieure 232 de la deuxième pièce 230' correspondent elles aussi à trois portions différentes d'une même couche en silicium, initialement d'un seul tenant, cette couche étant déposée sur les couches 231, 237 et 233 au cours de la fabrication du dispositif.

Chacune des surfaces S1 à S4 est parallèle au substrat. Le vecteur normal sortant n2 de la deuxième surface S2 dirigé vers le bas, c'est-à-dire que son sens est opposé à celui du vecteur Z. Au contraire, le vecteur normal sortant n4 de la quatrième surface S4 est dirigé vers le haut, dans le même sens que le vecteur Z.

Dans le dispositif 23, les forces verticales d'origine électrostatique, exercées sur la deuxième pièce 230' au niveau de la deuxième surface S2, et au niveau de la quatrième surface S4 ne se compensent pas exactement l'une avec l'autre, lorsque la deuxième pièce est décalée par rapport à sa position de référence. Mais ce dispositif 23 a en revanche l'avantage d'être relativement aisé à fabriquer, car il peut être fabriqué avec deux niveaux de lithographie seulement pour ce qui est de la deuxième pièce 230' (et, en tout, trois niveaux de lithographie).

Dans les dispositifs 25 et 28, à la différence du dispositif 23, les deuxième et quatrième surface S2 et S4 sont situées d'un même côté de la deuxième pièce 250', 280'. On évite ainsi d'appliquer à la deuxième pièce un couple de torsion autour de son axe longitudinal Y.

Cela permet par ailleurs, lors du déplacement de la deuxième pièce par rapport à la première pièce, parallèlement à l'axe X, de conserver des aires de superposition égales l'une à l'autre pour les premier et deuxième condensateurs. En effet, l'aire de superposition varie alors de la même manière pour le premier et pour le deuxième condensateur, lors de ce déplacement. On annule ainsi à la fois la force verticale moyenne $F_{Z,o}$, le coefficient de couplage longitudinal-vertical $K_{zx}$, et le coefficient B.

La structure du dispositif 25 est comparable à la structure du dispositif 23 mais la première pièce 250 comprend un seul rebord longitudinal (parallèle à l'axe Y) au lieu de deux, et, en revanche, ce même rebord longitudinal comprend une première partie 259, en marche d'escalier et à bordure dentelée, et, dans l'alignement de cette première partie 259, une deuxième partie 260, en surplomb et à bordure dentelée. En quelque sorte, c'est comme si l'on avait regroupé sur un même côté de la deuxième pièce 250' les premier et deuxième rebords du dispositif 23. Dans le dispositif 25, le rebord longitudinal 250 peut comprendre en outre une troisième partie 261, en marche d'escalier et à bordure dentelée, alignée avec les première et deuxième parties 259, 260. La deuxième partie 260 est alors située, le long de la première pièce 250, entre les première et troisième parties 259 et 261, ce qui permet de réduire encore mieux les couples de forces exercées sur la deuxième pièce 250'.

Pour ce qui est de la deuxième pièce 250', elle comprend, sur un même bord, trois parties successives :

- deux en surplomb et à bordure dentelée, venant se superposer en partie aux première et troisième parties 259, 261 du rebord 250, et

- une en marche d'escalier, et à bordure dentelée, insérée sous la deuxième partie 260, en surplomb, du rebord 250.

Le dispositif 25 peut être réalisé lui aussi à partir d'un substrat de type SOI. Sa structure, en empilement de couches parallèles au substrat 264, est similaire à celle du dispositif 23 (l'empilement en question comprend donc le substrat, la couche isolante, gravée sélectivement, et une première puis une deuxième couches de silicium, également gravées pour délimiter la deuxième pièce 250' et les surfaces libres S1, S2, S3, S4 dont la géométrie particulière a été présentée en détail plus haut).

Pour ce qui est maintenant du dispositif 28, vu en coupe et de côté sur la figure 28, il s'agit d'une variante de réalisation dans laquelle les deuxième et quatrième surfaces S2 et S4 sont respectivement une face supérieure libre, et une face inférieure libre d'une même couche en semi-conducteur gravée latéralement pour former une rangée de dents triangulaires. C'est cette couche qui forme la deuxième électrode 282. Du fait de cette structure, chaque portion triangulaire de la surface S4 coïncide exactement avec une portion triangulaire identique de la surface S2, en projection selon l'axe Z (ces deux portions correspondant aux faces supérieure et inférieure d'une même dent triangulaire). La rangée de dents triangulaires formée le long de la couche 282 est insérée (en quelque sortes prise en sandwich) entre une rangée de dents triangulaires découpée le long d'un bord d'une couche inférieure 281 de la première pièce 280, et une rangée de dents triangulaires découpée le long d'un bord d'une couche supérieure 283 de la première pièce 280.

Une couche d'espacement 284 sépare les couches inférieures et supérieures 281, 283.

Dans cette configuration, la compensation des forces électrostatiques verticales, exercées sur la deuxième pièce 280' au niveau des deuxième et quatrième surfaces S2 et S4, est excellente et les moments de ces forces sont particulièrement faibles. Mais on remarquera qu'une couche supplémentaire et un niveau de lithographie supplémentaire sont nécessaires, par rapport au dispositif 23 (pour la première pièce 280, il faut, en plus de la couche isolante, trois couches 281, 284 et 283, chacune gravée, au lieu de deux couches seulement).

Les variantes de réalisation 23, 25 et 28 correspondent à des cas dans lesquels on maximise le coefficient de raideur longitudinal tout en annulant le coefficient de raideur transverse dans le plan parallèle aux surfaces libres des électrodes (coefficient $K_{xy}$). Les différentes caractéristiques de ces variantes de réalisation, qui permettent de compenser au moins en partie les composantes verticales des forces électrostatiques, peuvent toutefois s'appliquer également au cas d'électrodes (telles que celles de la figure 15) ayant des formes adaptées pour maximiser le coefficient de raideur transverse tout en annulant le coefficient de raideur longitudinal. C'est le cas des dispositifs 23B et 25B, représentés sur les figures 23B et 24B pour l'un, et 25B, 26B et 27B pour l'autre. Le dispositif 23B est similaire au dispositif 23 présenté en détail ci-dessus, mais les dents électrodes forment des coins à angle droit, avec les bords de la première électrode perpendiculaires aux bords de la deuxième électrode (comme pour le dispositif de la figure 15). Cette différence mise à part, le dispositif 23B est identique au dispositif 23 et, sur les figures, ses différents éléments sont repérés par les mêmes signes de références que pour le dispositif 23.

De même, le dispositif 25B est similaire au dispositif 25 présenté en détail ci-dessus, mais les dents électrodes forment des coins à angle droit, avec les bords de la première électrode perpendiculaires aux bords de la deuxième électrode. Cette différence mise à part, le dispositif 25B est identique au dispositif 25 et, sur les figures, ses différents éléments sont repérés par les mêmes signes de références que pour le dispositif 25.

On pourra noter à nouveau, concernant ces dispositifs, que les dispositifs 25B et 28 permettent non seulement d'annuler le coefficient de raideur transverse $K_{xy}$ dans le plan, mais aussi le coefficient de raideur hors plan $K_{zx}$ (ce qui n'est pas le cas du dispositif 23B).

Linéarité

Dans un dispositif de condensateur à surface variable tel que celui décrit ci-dessus, il est souhaitable en général que la force électrostatique entre électrodes varie de manière linéaire en fonction du déplacement r entre électrodes (pour ne pas introduire d'effets non-linéaires parasites, sources par exemple d'inharmonicité dans le mouvement d'oscillation de la deuxième électrode). Pour obtenir une telle variation linéaire de cette force électrostatique, il est donc souhaitable que la capacité C du condensateur varie de manière quadratique en fonction du déplacement r, sans termes non linéaires d'ordre supérieur à deux, soit : $C = Co + D.r + E.r^2$.

Pour deux électrodes 291, 292 comprenant par exemple, chacune, une avancée triangulaire qui s'étend à partir d'un bloc principal rectangulaire (figure 29), en première approximation, si l'on néglige tous les effets de bords, la variation de la capacité C a la forme quadratique souhaitée :

- à partir du moment où la pointe du triangle de la première électrode 291 commence à se superposer à la pointe du triangle de la deuxième électrode 292 (la position limite, pour laquelle les deux électrodes ne se superposent quasiment plus, est représenté sur la figure 29),

- et jusqu'à ce que la partie triangulaire de la première électrode 291 se superpose entièrement à la partie rectangulaire 292 de la deuxième électrode (situation correspondant à la figure 30A).

Plus généralement, si l'on néglige tous les effets de bords, la capacité C a la variation quadratique souhaitée tant que les points de chevauchement $A_1$, $A_2$, ... restent situés sur les bords rectilignes $b_{11}$, $b_{12}$, $b_{21}$, $b_{22}$ qui délimitent les électrodes, dans la zone de superposition. En effet, tant que cette condition est vérifiée, l'aire de superposition $A_S$ varie de manière quadratique avec le déplacement r.

La distance sur laquelle la deuxième électrode peut se déplacer (par rapport à la première électrode), tout en conservant une variation quadratique en r pour la capacité $C(r)$, est donc égale, en première approximation, à la longueur L des bords $b_{11}$, $b_{12}$, $b_{21}$, $b_{22}$, en projection sur la direction de déplacement d. Dans le cas du dispositif 29 de la figure 29, cette longueur L est égale à la distance entre la base de la partie triangulaire de l'électrode 291, et son sommet O1 (figure 30A).

Cette première approche doit néanmoins être affinée en tenant compte des effets de bords, qui peuvent modifier de manière importante la valeur de la capacité C.

En l'occurrence, des simulations numériques par éléments finis montrent que la variation de la capacité C d'un condensateur à surface variable tel que celui décrit plus haut s'écarte d'une variation de type quadratique lorsque les électrodes se superposent à peine (comme sur la figure 29). En pratique, on constate que la capacité C a la variation quadratique souhaitée, avec une bonne précision (meilleure que 5%), lorsque les électrodes se superposent l'une à l'autre sur une distance au moins égale à 1 fois le gap g (et de préférence supérieure à 2 fois le gap g).

En d'autres termes, ces simulations montrent que des effets de bords, qui éloignent d'une variation quadratique du type C=Co+D.r+E.r$^2$, se manifestent, dans le plan des électrodes, sur une distance comparable au gap g.

La distance sur laquelle la deuxième électrode peut se déplacer (par rapport à la première électrode), tout en conservant une variation quadratique en r pour la capacité C(r), est donc égale non pas à L, en fait, mais plutôt à L - 2×g (puisque les effets de bord « non quadratiques » se ressentent sur une distance typique g, à chaque extrémité de la plage de déplacement). Pour que cette latitude de déplacement L - 2×g reste relativement importante, il est donc souhaitable que la longueur L des bords $b_{11}$, $b_{12}$, $b_{21}$, $b_{22}$, en projection sur la direction de déplacement d, soit au moins égale à 3 fois le gap g, et même, de préférence supérieure à 6 fois le gap g (pour faire fonctionner le dispositif le plus loin possible des deux configurations extrêmes correspondant respectivement aux figures 29 et 30A).

Dans le cas où les deux électrodes ont chacune une forme de coin à angle droit, et se superposent avec les bords de la première électrode ($b_{11}$ et $b_{21}$) perpendiculaires à ceux de la deuxième électrode ($b_{21}$ et $b_{22}$), comme sur la figure 30B par exemple, la longueur L, qui est choisie au moins égale à 3 fois le gap g (et même, de préférence supérieure à 6 fois le gap g) est la longueur de celui des quatre bords $b_{11}$, $b_{21}$, $b_{21}$, $b_{22}$ qui est parallèle à la direction de déplacement d et qui est le plus court (il s'agit du bord $b_{12}$ sur la figure 30B). Dans ce cas, on peut même prévoir, pour limiter au maximum les effets de bords, que chaque bord $b_{11}$, $b_{21}$, $b_{21}$, $b_{22}$ (et pas seulement le bord mentionné ci-dessus) ait une longueur supérieure à trois fois, ou même six fois le gap g.

## Intégration dans un MEMS ; exemple d'un gyromètre

La figure 31 montre, vu de dessus, un gyromètre 1 à deux cadres mobiles 11', 21' équipé de dispositifs de condensateurs à surface variable 30', 40', 50', 60' tels que présentés précédemment.

Ce gyromètre 1 est identique au gyromètre 1' de la figure 1, si ce n'est qu'il comprend en outre les dispositifs 30', 40', 50', 60' en question.

Les dispositifs 30' et 40' couplent mécaniquement le premier cadre 11' au substrat 3' sur lequel est réalisé le gyromètre. Ainsi, pour chacun de ces deux dispositifs, la première électrode 31', 41' est solidaire du substrat 3' tandis que la deuxième électrode 32', 42' est solidaire du cadre 11'. De même, les dispositifs 50' et 60' couplent mécaniquement le deuxième cadre 21' au substrat 3' : pour chacun de ces deux dispositifs, la première électrode 51', 61' est solidaire du substrat 3' tandis que la deuxième électrode 62', 62' est solidaire du cadre 21'. Comme déjà indiqué, pour le premier cadre comme pour le deuxième cadre, la direction de déplacement d par rapport au substrat est la direction X (guidage essentiellement uni-dimensionnel, d'axe X).

Les dispositifs 30' et 50' sont configurés et agencés chacun pour obtenir un coefficient de raideur longitudinal $K_{//}$ important (et un coefficient de raideur transverse faible ou nul). Ces dispositifs sont par exemple similaires au dispositif 13 de la figure 13.

Quant aux dispositifs 40' et 60', ils sont configurés et agencés chacun pour obtenir au contraire un coefficient de raideur transverse $K_T$ important (et un coefficient de raideur longitudinal faible ou nul). Ces dispositifs sont par exemple similaires au dispositif 18 de la figure 18.

Le dispositif 30' permet d'ajuster électriquement la fréquence d'oscillation du premier cadre 11', de manière à la rendre égale à celle du deuxième cadre, malgré les imperfections de fabrication.

Le dispositif 40' permet quant à lui de corriger des défauts des ressorts 13', 14', défauts qui induisent un couplage entre les déplacements parallèles à X et ceux parallèles à Y. En l'absence de défauts de fabrication, les ressorts 13' et 14' assurent un guidage unidimensionnel du cadre 11', sans couplage entre les déplacements parallèles à X et ceux parallèles à Y. Mais en pratique, on constate néanmoins un léger couplage entre ces deux mouvements. Ce couplage influence directement l'exactitude du gyromètre : il dégrade cette exactitude et contribue à introduire un biais, dans la mesure de la vitesse de rotation $\Omega_z$. En effet, la direction Y est la direction de détection des déplacements causés par la rotation à mesurer.

Introduire un coefficient de raideur transverse $K_T$, qui couple les déplacements parallèles à X et ceux parallèles à Y, et qui est réglable électriquement permet alors de corriger ce défaut mécanique des ressorts 13', 14' et de réduire le biais en question.

A titre d'exemple, les ressorts 13', 14' en question peuvent être réalisés par gravure profonde d'une couche épaisse (ou d'un empilement de couche), de part en part, de manière à délimiter dans cette couche une sorte de tube à section en O ou en double U (figure 31), dont l'axe est perpendiculaire à la couche (l'axe du tube est parallèle à l'axe Z). Ce ressort est alors formé de deux membranes relativement minces, chaque membrane étant repliée sur elle-même autour d'un axe parallèle à Z, pour former un U. Hors défauts de fabrication, un tel ressort guide effectivement le déplacement du cadre de manière unidimensionnelle.

Pour le dispositif 30', la première électrode 31' est réalisée à l'aplomb de l'un des flancs du cadre 11' (i.e. : à l'aplomb de l'un des bords du cadre 11'). La partie de la deuxième électrode 32', gravée pour former une rangée de dents triangulaires est située le long de ce flanc du cadre 11'.

Pour le dispositif 50', les première et deuxième électrodes 51', 52' sont réalisées de la même manière (respectivement à l'aplomb, et le long d'un flanc du cadre 21').

Pour le dispositif 40', la première électrode 41' est située sous le cadre 11'. La deuxième électrode 42' est réalisée quant à elle sur une face inférieure du cadre 11'. Les motifs (en escalier) de la deuxième électrode peuvent être obtenus en gravant le cadre 11' sur toute son épaisseur, ou en gravant seulement une couche inférieure de ce cadre.

Le dispositif 60' est réalisé de manière comparable au dispositif 40'.

En variante, les dispositifs 30' et 50' pourraient eux aussi être réalisées avec des première électrodes situées sous le cadre 11', 21' (électrodes « enterrées », en quelque sorte). Ou encore, on pourrait prévoir de réaliser les dispositifs 40', 60' sur des flancs des cadres mobiles. En variante encore,

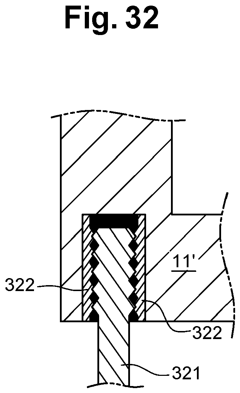

En variante encore, un ou plusieurs des dispositifs de condensateurs à surface variable du gyromètre pourrait être réalisé avec une deuxième électrode 322 solidaire de l'un des cadres, 11', et une première électrode 321 solidaire du substrat 3' mais s'étendant au-dessus de la deuxième électrode 321, comme représenté sur la figure 32 (en d'autres termes, le dispositif de condensateur pourrait être réalisé sur le dessus du cadre 11').

Quoiqu'il en soit, dans l'exemple de la figure 31, les premières électrodes 31', 41', 51', 61', réalisées sur le substrat 3' (et qui sont par exemple séparées du substrat par une couche isolante électriquement), sont disjointes les unes des autres. Cela permet d'appliquer à ces électrodes des potentiels électriques différents les uns des autres (les électrodes en question n'étant pas en contact électrique direct les unes avec les autres), et, ainsi, d'ajuster indépendamment les coefficients de raideur longitudinaux et transverse.

Ainsi, pour le premier cadre 11', par exemple, on peut ajuster indépendamment, de manière électrique, le coefficient de raideur longitudinal $K_{//}$ introduit par le dispositif 30' d'une part, et le coefficient de raideur transverse $K_T$ introduit par le dispositif 40' d'autre part.

Dans l'exemple de la figure 31, les cadres mobiles sont couplées mécaniquement au substrat par les dispositifs de condensateurs 30' à 60'. En alternative, ou en complément, les masses d'épreuves 10' et 20' pourraient elles aussi être pourvues de tels dispositifs de condensateurs à surface variable.

Par ailleurs, les différents types de dispositifs de condensateurs à surface variable décrits plus haut en référence aux figures 4 à 28 pourraient équiper un tel gyromètre.

Dans l'exemple de la figure 31, pour chaque dispositif de condensateur à surface variable, la deuxième électrode est guidée de manière unidimensionnelle dans son mouvement par rapport à la première électrode.

Un tel guidage unidimensionnel se rencontre dans un accéléromètre de type MEMS unidimensionnel. Un tel accéléromètre peut utilement être équipé d'un dispositif de condensateur à surface variable dont la première électrode est solidaire d'un support de l'accéléromètre tandis que la deuxième électrode est solidaire d'une masse d'épreuve de cet accéléromètre. On utilisera alors de préférence un dispositif de condensateur agencé pour obtenir un coefficient de raideur longitudinal $K_{//}$ de grande valeur absolue. Cela permet de modifier électriquement des caractéristiques de l'accéléromètre, tels que son spectre fréquentiel de sensibilité. Cette possibilité de réglage permet par exemple de corriger des petites variations de raideur mécanique des ressorts de l'accéléromètre, d'un accéléromètre à l'autre, dues à de légers défauts de reproductibilité lors de la fabrication. Ce réglage électrique, réalisé après fabrication, permet ainsi de produire des séries d'accéléromètres calibrés, identiques les uns aux autres en termes de sensibilité spectrale malgré les légers défauts de reproductibilité en question.

Par ailleurs, dans des accéléromètres bidimensionnels à une seule masse d'épreuve, il peut être intéressant d'introduire un coefficient de raideur transverse, $K_T$, réglable électriquement, pour corriger d'éventuels couplages entre les deux directions de détection.

Plus généralement, un dispositif de condensateur à surface variable tel que décrit plus haut peut s'avérer utile aussi bien dans le cas d'un guidage unidimensionnel entre deux pièces d'un MEMS que dans le cas d'un guidage bidimensionnel. En effet, avec un ou plusieurs dispositifs de ce type, on peut en fait introduire une matrice de raideur bidimensionnelle dont les différents coefficients sont réglables électriquement, ce qui est donc bien adapté pour corriger ou équilibrer un mouvement bidimensionnel quelconque.

## Revendications

1. Dispositif (4; 6 ; 8 ; 9; 10; 11 ; 12; 13 ; 14; 15; 16 ; 17; 18; 19 ; 21 ; 23 ; 23B ; 25 ; 25B ; 28 ; 30' ; 40' ; 50' ; 60') de condensateur à surface variable pour un microsystème électromécanique (1), le dispositif comprenant une première électrode (41 ; 61 ; 81 ; 91 ; 101 ; 111 ; 121 ; 131 ; 141 ; 151 ; 161 ; 171 ; 181 ; 191 ; 211 ; 231 ; 251 ; 281 ; 31' ; 41' ; 51' ; 61') et une deuxième électrode (42 ; 62 ; 82 ; 92 ; 102 ; 112 ; 122 ; 132 ; 142 ; 152 ; 162 ; 172 ; 182 ; 192 ; 212 ; 232 ; 252 ; 282 ; 32' ; 42' ; 52' ; 62') mobiles l'une par rapport à l'autre selon une direction de déplacement (d) donnée, la première électrode ayant une première surface (S1) libre et la deuxième électrode ayant une deuxième surface (S2) libre sensiblement parallèle à la première surface, une partie de la première surface se superposant à une partie de la deuxième surface,

la première surface (S1) étant délimitée latéralement par un premier bord ($b_{11}$) et un deuxième bord ($b_{21}$) rectilignes et non parallèles entre eux, dans la partie où elle se superpose à la deuxième surface (S2), la deuxième surface (S2) étant délimitée latéralement elle aussi, dans la partie où elle se superpose à la première surface (S1), par un premier bord ($b_{12}$) et un deuxième bord ($b_{22}$) rectilignes et non parallèles entre eux et qui, en projection sur la première surface (S1), intersectent respectivement le premier bord ($b_{11}$) de la première surface (S1) et le deuxième bord ($b_{21}$) de la première surface, **caractérisé en ce que** le dispositif comprend une électrode additionnelle (193 ; 213), solidaire de la première électrode (191 ; 211) et ayant une surface libre additionnelle (S3) qui est sensiblement parallèle à la deuxième surface (S2) et qui se superpose en partie à la deuxième surface, la surface libre additionnelle (S3) étant complémentaire de la première surface (S1) libre, au moins :

- au voisinage d'un premier point de chevauchement (A1) où, en projection sur la première surface (S1), le premier bord de la deuxième surface intersecte le premier bord de la première surface, et
- au voisinage d'un deuxième point de chevauchement (A2) où, en projection sur la première surface, le deuxième bord de la deuxième surface intersecte le deuxième bord de la première surface.

2. Dispositif (15 ; 16 ; 17 ; 18 ; 21 ; 23B ; 25B ; 40' ; 60') selon la revendication précédente, dans lequel :

- le premier bord ($b_{11}$) et le deuxième bord ($b_{21}$) de la première surface (S1) sont perpendiculaires l'un à l'autre, à plus ou moins 15 degrés près, et dans lequel
- le premier bord ($b_{12}$) et le deuxième bord ($b_{22}$) de la deuxième surface (S2) sont perpendiculaires l'un à l'autre, à plus ou moins 15 degrés près.

3. Dispositif (15 ; 16 ; 17 ; 18 ; 21 ; 23B ; 25B ; 40' ; 60') selon l'une des revendications précédentes, dans lequel,

- le premier bord ($b_{11}$) de la première surface et le premier bord ($b_{12}$) de la deuxième surface sont perpendiculaires l'un à l'autre, à plus ou moins 15 degrés près, et
- le deuxième bord ($b_{21}$) de la première surface et le deuxième bord ($b_{22}$) de la deuxième surface sont perpendiculaires l'un à l'autre, à plus ou moins 15 degrés près.

4. Dispositif (15 ; 16 ; 17 ; 18 ; 21 ; 23B ; 25B ; 40' ; 60') selon l'une des revendications précédentes, dans lequel :

- ladite direction de déplacement (d) est parallèle au premier bord ($b_{11}$) de la première surface, ou au premier bord de la deuxième surface ($b_{12}$), à plus ou moins 15 degrés près, et dans lequel
- ladite direction de déplacement (d) est parallèle au deuxième bord ($b_{21}$) de la première surface, ou au deuxième bord ($b_{22}$) de la deuxième surface, à plus ou moins 15 degrés près.

5. Dispositif (15 ; 16 ; 17 ; 18 ; 21 ; 23B ; 25B ; 40' ; 60') selon l'une des revendications précédentes, dans lequel :

- pour chaque secteur angulaire, délimité par le premier bord ($b_{11}$) de la première surface d'une part, et par le premier bord ($b_{12}$) de la deuxième surface d'autre part, ladite direction de déplacement (d) est écartée angulairement de la bissectrice ($B_{sect-}$, $B_{sect+}$) dudit secteur angulaire d'au moins 15 degrés, et dans lequel
- pour chaque secteur angulaire, délimité par le deuxième bord ($b_{21}$) de la première surface d'une part, et par le deuxième bord ($b_{22}$) de la deuxième surface d'autre part, ladite direction de déplacement (d) est écartée angulairement de la bissectrice ($B_{sect-}$, $B_{sect+}$) dudit secteur angulaire d'au moins 15 degrés.

6. Dispositif (6 ; 8 ; 9 ; 10 ; 11 ; 12 ; 13 ; 14 ; 19 ; 23 ; 25 ; 28 ; 30' ; 50') selon la revendication 1, dans lequel

- un secteur angulaire, délimité par le premier bord ($b_{11}$) de la première surface et par le premier bord ($b_{12}$) de la deuxième surface, et dans lequel se trouve ladite direction de déplacement (d), a une ouverture angulaire de 120 degrés, à plus ou moins 15 degrés près, et dans lequel
- un secteur angulaire, délimité par le deuxième bord ($b_{21}$) de la première surface et par le deuxième bord ($b_{22}$) de la deuxième surface, et dans lequel se trouve ladite direction de déplacement (d), a une ouverture angulaire de 120 degrés, à plus ou moins 15 degrés près.

7. Dispositif (6 ; 8 ; 9 ; 10 ; 11 ; 12 ; 13 ; 14 ; 19 ; 23 ; 23B ; 25 ; 25B ; 28 ; 30' ; 50') selon la revendication précédente, dans lequel :

- ladite direction de déplacement (d) est parallèle à la bissectrice ($B_{sect-}$, $B_{sect+}$) de l'un des secteurs angulaires délimités par le premier bord ($b_{11}$) de la première surface d'une part, et par le premier bord ($b_{12}$) de la deuxième surface d'autre part, à plus ou moins 15 degrés près, et dans lequel
- ladite direction de déplacement (d) est parallèle à la bissectrice ($B_{sect-}$, $B_{sect+}$) de l'un des secteurs angulaires délimités par le deuxième bord ($b_{21}$) de la première surface d'une part, et par le deuxième bord ($b_{22}$) de la deuxième surface d'autre part, à plus ou moins 15 degrés près.

8. Dispositif (4 , 6 , 8 , 9 10 , 11 , 12 , 13 , 14 , 15 , 16 , 17 , 18 , 19 , 21 ; 23 ; 23B ; 25 ; 25B ; 28 ; 30' ; 40' ; 50' ; 60') selon l'une des revendications précédentes dans lequel,

- dans une direction (Z) perpendiculaire aux première et deuxième surfaces (S1, S2), les première et deuxième surfaces sont séparées l'une de l'autre par une distance (g) donnée, et dans lequel
- en projection sur ladite direction de déplacement (d), les premier et deuxième bords ($b_{11}$, $b_{21}$) rectilignes qui délimitent la première surface (S1) libre, ainsi que les premier et deuxième bords ($b_{12}$, $b_{22}$) rectilignes qui délimitent la deuxième surface (S2) libre, ont chacun une longueur (L) supérieure à trois fois ladite distance (g).

9. Dispositif (19 ; 21) selon l'une des revendications précédentes, dans laquelle l'électrode additionnelle (193 ; 213) est isolée électriquement de la première électrode (191 ; 211) et de la deuxième électrode (192 ; 212) de sorte qu'une tension électrique entre l'électrode additionnelle (193 ; 213) et la première électrode (191 ; 211) peut être réglée indépendamment d'une tension électrique entre la deuxième électrode (192 ; 212) et la première électrode (191 ; 211).

10. Dispositif (23 ; 23B ; 25 ; 25B ; 28) selon l'une des revendications précédentes, dans lequel :

- les première et deuxième surfaces (S1, S2) libres forment un premier condensateur à surface variable,
- la première électrode (231 ; 251 ; 281) fait partie d'une première pièce (230 ; 250 ; 280), qui présente une troisième surface (S3) libre, en plus de la première surface (S1) libre,
- la deuxième électrode (232 ; 252 ; 282) fait partie d'une deuxième pièce (230' ; 250' ; 280'), mobile par rapport à la première pièce selon ladite direction de déplacement (d), et qui présente une quatrième surface (S4) libre, en plus de la deuxième surface (S2) libre, la quatrième surface (S4) libre étant sensiblement parallèle à la troisième surface (S3) libre et se superposant en partie à la troisième surface (S3) libre pour former avec elle un deuxième condensateur à surface variable, et dans lequel
- les deuxième et quatrième surfaces (S2, S4) libres de la deuxième pièce ont des vecteurs normaux sortants respectifs (n2, n4) dirigés dans des sens opposés.

11. Dispositif (25 ; 25B ; 28) selon la revendication précédente, dans lequel la deuxième pièce (250' ; 280') a une forme allongée selon un axe longitudinal (Y), ledit axe longitudinal est parallèle à la deuxième surface (S2) et à la quatrième surface (S4), et la deuxième surface et la quatrième surface s'étendent en porte-à-faux, d'un même côté de la deuxième pièce (250' ; 280').

12. Système de condensateurs à surface variable pour un microsystème électromécanique (1), le système comprenant un premier dispositif (40') de condensateur à surface variable, conforme à l'une quelconque des revendications 2 à 5, ainsi qu'un deuxième dispositif (30') de condensateur à surface variable conforme à la revendication 6 ou 7, dans lequel la première électrode (41') du premier dispositif (40') de condensateur et la première électrode (31') du deuxième dispositif (30') de condensateur sont solidaires l'une de l'autre, et dans lequel la deuxième électrode (42') du premier dispositif (40') de condensateur et la deuxième électrode (32') du deuxième dispositif (30') de condensateur font parties d'une même pièce mécanique, ou d'un même ensemble de pièces mécaniques, mobile par rapport aux premières électrodes (31', 41') selon ladite direction de déplacement (X).

13. Accéléromètre de type microsystème électromécanique, comprenant :

- un dispositif de condensateur à surface variable selon l'une des revendications 1 à 11, ou un système de condensateurs à surface variable selon la revendication 12,
- un support, la première électrode étant solidaire du support, et
- une pièce mobile, mobile par rapport au support selon ladite direction de déplacement, la deuxième électrode étant solidaire de ladite pièce mobile.

**14.** Gyromètre (1) de type microsystème électromécanique, comprenant :

- un dispositif (30', 40', 50', 60') de condensateur à surface variable selon l'une des revendications 1 à 11, ou un système de condensateurs à surface variable selon la revendication 12,
- un support (3'), la première électrode (31', 41', 51', 61') étant solidaire du support, et
- un cadre (11', 21') mobile ou une masse d'épreuve (10', 20'), mobile par rapport au support (3') selon ladite direction de déplacement (X), la deuxième électrode (32', 42', 52', 62') étant solidaire du cadre mobile (11', 21') ou de la masse d'épreuve.

**Patentansprüche**

**1.** Kondensatorvorrichtung (4; 6; 8; 9; 10; 11; 12; 13; 14; 15; 16; 17; 18; 19; 21; 23; 23B; 25; 25B; 28; 30'; 40'; 50'; 60') mit variabler Oberfläche für ein elektromechanisches Mikrosystem (1), wobei die Vorrichtung eine erste Elektrode (41; 61; 81; 91; 101; 111; 121; 131; 141; 151; 161; 171; 181; 191; 211; 231; 231; 251; 281; 31'; 41'; 51'; 61') und eine zweite Elektrode (42; 62; 82; 92; 102; 112; 122; 132; 142; 152; 162; 172; 182; 192; 212; 232; 252; 282; 32'; 42'; 52'; 62'), die gemäß einer gegebenen Bewegungsrichtung (d) relativ zueinander beweglich sind, umfasst, wobei die erste Elektrode eine erste freie Oberfläche (S1) aufweist und die zweite Elektrode eine zweite freie Oberfläche (S2) aufweist, die im Wesentlichen parallel zur ersten Oberfläche ist, wobei ein Teil der ersten Oberfläche einen Teil der zweiten Oberfläche überlappt, wobei die erste Oberfläche (S1) seitlich durch einen ersten Rand ($b_{11}$) und einen zweiten Rand ($b_{21}$) begrenzt ist, die in dem Teil, in dem sie sich mit der zweiten Oberfläche (S2) überlagert, geradlinig und nicht parallel zueinander sind, wobei die zweite Oberfläche (S2) ebenfalls seitlich begrenzt ist, und in dem Teil, in dem sie sich mit der ersten Oberfläche (S1) überlagert, durch einen ersten Rand ($b_{12}$) und einen zweiten Rand ($b_{22}$), die geradlinig und nicht parallel zueinander sind und die in der Projektion auf die erste Oberfläche (S1) den ersten Rand ($b_{11}$) der ersten Oberfläche (S1) bzw. den zweiten Rand ($b_{21}$) der ersten Oberfläche schneiden, **dadurch gekennzeichnet, dass** die Vorrichtung eine zusätzliche Elektrode (193; 213), die fest mit der ersten Elektrode (191; 211) verbunden ist und eine zusätzliche freie Oberfläche (S3) aufweist, die im Wesentlichen parallel zur zweiten Oberfläche (S2) verläuft und die zweite Oberfläche teilweise überlagert, wobei die zusätzliche freie Oberfläche (S3) komplementär zur ersten freien Oberfläche (S1) ist, zumindest:

- in der Nähe eines ersten Überlappungspunkts (A1), in dem der erste Rand der zweiten Oberfläche in Projektion auf die erste Oberfläche (S1) den ersten Rand der ersten Oberfläche schneidet, und
- in der Nähe eines zweiten Überlappungspunkts (A2), in dem der zweite Rand der zweiten Oberfläche in Projektion auf die erste Oberfläche den zweiten Rand der ersten Oberfläche schneidet.

**2.** Vorrichtung (15; 16; 17; 18; 21; 23B; 25B; 40'; 60') nach vorhergehendem Anspruch, bei der:

- der erste Rand ($b_{11}$) und der zweite Rand ($b_{21}$) der ersten Oberfläche (S1) innerhalb von plus oder minus 15 Grad senkrecht zueinander stehen, und bei der
- der erste Rand ($b_{12}$) und der zweite Rand ($b_{22}$) der zweiten Oberfläche (S2) innerhalb von plus oder minus 15 Grad senkrecht zueinander stehen.

**3.** Vorrichtung (15; 16; 17; 18; 21; 23B; 25B; 40'; 60') nach einem der vorhergehenden Ansprüche, bei der

- der erste Rand ($b_{11}$) der ersten Oberfläche und der erste Rand ($b_{12}$) der zweiten Oberfläche innerhalb von plus/minus 15 Grad senkrecht zueinander stehen, und
- der zweite Rand ($b_{21}$) der ersten Oberfläche und der zweite Rand ($b_{22}$) der zweiten Oberfläche innerhalb von plus oder minus 15 Grad senkrecht zueinander stehen.

**4.** Vorrichtung (15; 16; 17; 18; 21; 23B; 25B; 40'; 60') nach einem der vorhergehenden Ansprüche, bei der:

- die Bewegungsrichtung (d) innerhalb von plus oder minus 15 Grad parallel zum ersten Rand ($b_{11}$) der ersten Oberfläche oder zum ersten Rand ($b_{12}$) der zweiten Oberfläche ist, und wobei
- die Bewegungsrichtung (d) innerhalb von plus oder minus 15 Grad parallel zum zweiten Rand (b21) der ersten Oberfläche oder zum zweiten Rand (b22) der zweiten Oberfläche verläuft.

**5.** Vorrichtung (15; 16; 17; 18; 21; 23B; 25B; 40'; 60') nach einem der vorhergehenden Ansprüche, bei der:

- für jeden Winkelsektor, der durch den ersten Rand ($b_{11}$) der ersten Oberfläche einerseits und durch den ersten Rand ($b_{12}$) der zweiten Oberfläche andererseits begrenzt ist, die Bewegungsrichtung (d) winkelmäßig von der Winkelhalbierenden ($B_{sect-}$, $B_{sect+}$) des Winkelsektors um mindestens 15 Grad abweicht, und bei der

- für jeden Winkelsektor, der durch den zweiten Rand ($b_{21}$) der ersten Oberfläche einerseits und durch den zweiten Rand ($b_{22}$) der zweiten Oberfläche andererseits begrenzt ist, die Bewegungsrichtung (d) winkelmäßig von der Winkelhalbierenden ($B_{sect-}$, $B_{sect+}$) des Winkelsektors um mindestens 15 Grad abweicht.

6. Vorrichtung (6; 8; 9; 10; 11; 12; 13; 14; 19; 23; 25; 28; 30'; 50') nach Anspruch 1, bei der

- ein Winkelsektor, der durch den ersten Rand ($b_{11}$) der ersten Oberfläche und durch den ersten Rand ($b_{12}$) der zweiten Oberfläche begrenzt ist und in dem die Bewegungsrichtung (d) liegt, eine Winkelöffnung von 120 Grad plus oder minus 15 Grad hat und in der

- ein Winkelsektor, der durch den zweiten Rand ($b_{21}$) der ersten Oberfläche und durch den zweiten Rand ($b_{22}$) der zweiten Oberfläche begrenzt ist und in dem sich die Bewegungsrichtung (d) befindet, eine Winkelöffnung von 120 Grad plus oder minus 15 Grad hat.

7. Vorrichtung (6; 8; 9; 10; 11; 12; 13; 14; 19; 23; 23B; 25; 25B; 28; 30'; 50') nach dem vorhergehenden Anspruch, bei der:

- die Bewegungsrichtung (d) parallel zur Winkelhalbierenden ($B_{sect-}$, $B_{sect+}$) eines der Winkelsektoren ist, die durch den ersten Rand ($b_{11}$) der ersten Oberfläche einerseits und durch den ersten Rand ($b_{12}$) der zweiten Oberfläche andererseits auf plus oder minus 15 Grad genau begrenzt werden, und bei der

- die Bewegungsrichtung (d) parallel zur Winkelhalbierenden ($B_{sect-}$, $B_{sect+}$) eines der Winkelsektoren ist, die durch den zweiten Rand ($b_{21}$) der ersten Oberfläche einerseits und durch den zweiten Rand ($b_{22}$) der zweiten Oberfläche andererseits auf plus oder minus 15 Grad genau begrenzt werden.

8. Vorrichtung (4; 6; 8; 9; 10; 11; 12; 13; 14; 15; 16; 17; 18; 19; 21; 23; 23B; 25; 25B; 28; 30'; 40'; 50'; 60') nach einem der vorhergehenden Ansprüche, bei der

- in einer Richtung (Z) senkrecht zur ersten und zweiten Oberfläche (81, 82) die erste und zweite Oberfläche durch einen gegebenen Abstand (g) voneinander getrennt sind, und bei der

- in Projektion auf die Bewegungsrichtung (d) der erste und der zweite geradlinige Rand ($b_{11}$, $b_{21}$), die die erste freie Oberfläche (S1) begrenzen, sowie der erste und der zweite geradlinige Rand ($b_{12}$, $b_{22}$), die die zweite freie Oberfläche (S2) begrenzen, jeweils eine Länge aufweisen, die dreimal so (L) groß als dieser Abstand (g) ist.

9. Vorrichtung (19; 21) nach einem der vorhergehenden Ansprüche, bei der die zusätzliche Elektrode (193; 213) von der ersten Elektrode (191; 211) und der zweiten Elektrode (192; 212) elektrisch derart isoliert ist, dass eine elektrische Spannung zwischen der zusätzlichen Elektrode (193; 213) und der ersten Elektrode (191; 211) unabhängig von einer elektrischen Spannung zwischen der zweiten Elektrode (192; 212) und der ersten Elektrode (191; 211) eingestellt werden kann.

10. Vorrichtung (23; 23B; 25; 25B; 28) nach einem der vorhergehenden Ansprüche, bei der:

- die erste und zweite freie Oberfläche (S1, S2) einen ersten Kondensator mit variabler Oberfläche bilden,
- die erste Elektrode (231; 251; 281) Teil eines ersten Teils (230; 250; 280) ist, das zusätzlich zu der ersten freien Oberfläche (S1) eine dritte freie Oberfläche (S3) aufweist,
- die zweite Elektrode (232; 252; 282) Teil eines zweiten Teils (230'; 250'; 280') ist, das in Bezug auf das erste Teil gemäß der Bewegungsrichtung (d) mobil ist, und das eine vierte freie Oberfläche (S4) zusätzlich zur zweiten freien Oberfläche (S2) aufweist, wobei die vierte freie Oberfläche (S4) im Wesentlichen parallel zur dritten freien Oberfläche (S3) ist und teilweise die dritte freie Oberfläche (S3) überlagert, um mit dieser einen zweiten Kondensator mit variabler Oberfläche zu bilden, und bei der
- die zweite und vierte freie Oberfläche (S2, S4) des zweiten Teils jeweils ausgehende Normalvektoren (n2, n4) haben, die in entgegengesetzte Richtungen zeigen.

11. Vorrichtung (25; 25B; 28) nach dem vorhergehenden Anspruch, bei der das zweite Teil (250'; 280') eine längliche Form entlang einer Längsachse (Y) aufweist, wobei die Längsachse parallel zur zweiten Oberfläche (S2) und zur vierten Oberfläche (S4) ist und die zweite Oberfläche und die vierte Oberfläche sich freitragend auf einer Seite des zweiten Teils (250'; 280') erstrecken.

**12.** Flächenvariables Kondensatorsystem für ein elektromechanisches Mikrosystem (1), wobei das System eine erste flächenvariable Kondensatorvorrichtung (40') gemäß einem der Ansprüche 2 bis 5 sowie eine zweite flächenvariable Kondensatorvorrichtung (30') gemäß Anspruch 6 oder 7 umfasst, in der die erste Elektrode (41') der ersten Kondensatorvorrichtung (40') und die erste Elektrode (31') der zweiten Kondensatorvorrichtung (30') miteinander verbunden sind, und in der die zweite Elektrode (42') der ersten Kondensatorvorrichtung (40') und die zweite Elektrode (32') der zweiten Kondensatorvorrichtung (30') Teile des gleichen mechanischen Teils oder der gleichen Baugruppe von mechanischen Teilen sind, die in Bezug zu den ersten Elektroden (31', 41 ') in der Bewegungsrichtung (X) beweglich sind.

**13.** Beschleunigungsmesser vom Typ elektromechanisches Mikrosystem, umfassend:

- eine flächenvariable Kondensatorvorrichtung nach einem der Ansprüche 1 bis 11 oder ein flächenvariables Kondensatorsystem nach Anspruch 12,

- einen Träger, wobei die erste Elektrode fest mit dem Träger verbunden ist, und

- ein bewegliches Teil, das in Bezug zum Träger in der Bewegungsrichtung beweglich ist, wobei die zweite Elektrode fest mit dem beweglichen Teil verbunden ist.

**14.** Gyrometer (1) vom Typ elektromechanisches Mikrosystem, umfassend:

- eine flächenvariable Kondensatorvorrichtung (30', 40', 50', 60') nach einem der Ansprüche 1 bis 11 oder ein flächenvariables Kondensatorsystem nach Anspruch 12,
- einen Träger (3'), wobei die erste Elektrode (31', 41', 51', 61') fest mit dem Träger verbunden ist, und
- einen beweglichen Rahmen (11', 21') oder eine Testmasse (10', 20'), die in Bezug zum Träger (3') in der Bewegungsrichtung (X) beweglich ist, wobei die zweite Elektrode (32', 42', 52', 62') fest mit dem beweglichen Rahmen (11', 21') oder der Testmasse verbunden ist.

## Claims

**1.** A variable area capacitor device (4; 6; 8; 9; 10; 11; 12; 13; 14; 15; 16; 17; 18; 19; 21; 23; 23B; 25; 25B; 28; 30'; 40'; 50'; 60') for a microelectromechanical system (1), the device comprising a first electrode (41; 61; 81; 91; 101; 111; 121; 131; 141; 151; 161; 171; 181; 191; 211; 231; 251; 281; 31'; 41'; 51'; 61') and a second electrode (42; 62; 82; 92; 102; 112; 122; 132; 142; 152; 162; 172; 182; 192; 212; 232; 252; 282; 32'; 42'; 52'; 62') which are movable relative to one another along a given direction of displacement (d), the first electrode having a first free surface (S1) and the second electrode having a second free surface (S2) substantially parallel to the first surface, part of the first surface being superimposed on part of the second surface,

the first surface (S1) being laterally delimited by a first edge ($b_{11}$) and a second edge ($b_{21}$) which are rectilinear and not parallel to each other, in the part where it is superimposed on the second surface (S2),
the second surface (S2) also being laterally delimited,
in the part where it is superimposed on the first surface (S1), by a first edge ($b_{12}$) and a second edge ($b_{22}$) which are rectilinear and not parallel to each other and which, in a projection onto the first surface (S1), intersect respectively the first edge ($b_{11}$) of the first surface (S1) and the second edge ($b_{21}$) of the first surface,
**characterised in that** the device comprises an additional electrode (193; 213), integral with the first electrode (191; 211) and having an additional free surface (S3) which is substantially parallel to the second surface (S2) and which is partially superimposed on the second surface, the additional free surface (S3) being complementary to the first free surface (S1), at least:

- in the vicinity of a first overlap point (A1) where, in a projection onto the first surface (S1), the first edge of the second surface intersects the first edge of the first surface, and
- in the vicinity of a second overlap point (A2) where, in a projection onto the first surface, the second edge of the second surface intersects the second edge of the first surface.

**2.** The device (15; 16; 17; 18; 21; 23B; 25B; 40'; 60') according to the preceding claim, wherein:

- the first edge ($b_{11}$) and the second edge ($b_{21}$) of the first surface (S1) are perpendicular to each other, to within 15 degrees, and wherein
- the first edge ($b_{12}$) and the second edge ($b_{22}$) of the second surface (S2) are perpendicular to each other, to within 15 degrees.

3. The device (15; 16; 17; 18; 21; 23B; 25B; 40'; 60') according to one of the preceding claims, wherein,

- the first edge ($b_{11}$) of the first surface and the first edge ($b_{12}$) of the second surface are perpendicular to each other, to within 15 degrees, and
- the second edge ($b_{21}$) of the first surface and the second edge ($b_{22}$) of the second surface are perpendicular to each other, to within 15 degrees.

4. The device (15; 16; 17; 18; 21; 23B; 25B; 40'; 60') according to one of the preceding claims, wherein:

- said direction of displacement (d) is parallel to the first edge ($b_{11}$) of the first surface, or to the first edge of the second surface ($b_{12}$), to within 15 degrees, and wherein
- said direction of displacement (d) is parallel to the second edge ($b_{21}$) of the first surface, or to the second edge ($b_{22}$) of the second surface, to within 15 degrees.

5. The device (15; 16; 17; 18; 21; 23B; 25B; 40'; 60') according to one of the preceding claims, wherein:

- for each angular sector, delimited by the first edge ($b_{11}$) of the first surface on the one hand, and by the first edge ($b_{12}$) of the second surface on the other hand, said direction of displacement (d) is angularly spaced from the bisector ($B_{sect-}$, $B_{sect+}$) of said angular sector by at least 15 degrees, and wherein
- for each angular sector, delimited by the second edge ($b_{21}$) of the first surface on the one hand, and by the second edge ($b_{22}$) of the second surface on the other hand, said direction of displacement (d) is angularly spaced from the bisector ($B_{sect-}$, $B_{sect+}$) of said angular sector by at least 15 degrees.

6. The device (6; 8; 9; 10; 11; 12; 13; 14; 19; 23; 25; 28; 30'; 50') according to claim 1, wherein

- an angular sector, delimited by the first edge ($b_{11}$) of the first surface and by the first edge ($b_{12}$) of the second surface, and wherein said direction of displacement (d) lies, has an angular aperture of 120 degrees, to within 15 degrees, and wherein
- an angular sector, delimited by the second edge ($b_{21}$) of the first surface and by the second edge ($b_{22}$) of the second surface, and wherein said direction of displacement (d) lies, has an angular aperture of 120 degrees, to within 15 degrees.

7. The device (6; 8; 9; 10; 11; 12; 13; 14; 19; 23; 23B; 25; 25B; 28; 30'; 50') according to the preceding claim, wherein:

- said direction of displacement (d) is parallel to the bisector ($B_{sect-}$, $B_{sect+}$) of one of the angular sectors delimited by the first edge ($b_{11}$) of the first surface on the one hand, and by the first edge ($b_{12}$) of the second surface on the other hand, to within 15 degrees, and wherein
- said direction of displacement (d) is parallel to the bisector ($B_{sect-}$, $B_{sect+}$) of one of the angular sectors delimited by the second edge ($b_{21}$) of the first surface on the one hand, and by the second edge ($b_{22}$) of the second surface on the other hand, to within 15 degrees.

8. The device (4; 6; 8; 9; 10; 11; 12; 13; 14; 15; 16; 17; 18; 19; 21; 23; 23B; 25; 25B; 28; 30'; 40'; 50'; 60') according to one of the preceding claims wherein,

- in a direction (Z) perpendicular to the first and second surfaces (S1, S2), the first and second surfaces are separated from each other by a given distance (g), and wherein
- in a projection onto said direction of displacement (d), the first and second rectilinear edges ($b_{11}$, $b_{21}$) which delimit the first free surface (S1), as well as the first and second rectilinear edges ($b_{12}$, $b_{22}$) which delimit the second free surface (S2), each have a length (L) greater than three times said distance (g).

9. The device (19; 21) according to one of the preceding claims, wherein the additional electrode (193; 213) is electrically insulated from the first electrode (191; 211) and from the second electrode (192; 212) so that an electric voltage between the additional electrode (193; 213) and the first electrode (191; 211) can be adjusted independently of an electric voltage between the second electrode (192; 212) and the first electrode (191; 211).

10. The device (23; 23B; 25; 25B; 28) according to one of the preceding claims, wherein:

- the first and second free surfaces (S1, S2) form a first variable area capacitor,
- the first electrode (231; 251; 281) forms part of a first piece (230; 250; 280), which has a third free surface (S3), in addition to the first free surface (S1),
- the second electrode (232; 252; 282) forms part of a second piece (230'; 250'; 280'), being movable relative to the first piece along said direction of displacement (d), and which has a fourth free surface (S4), in addition to the second free surface (S2), the fourth free surface (S4) being substantially parallel to the third free surface (S3) and partly superimposed on the third free surface (S3) to form therewith a second variable area capacitor, and wherein
- the second and fourth free surfaces (S2, S4) of the second piece have respective outgoing normal vectors (n2, n4) pointing in opposite directions.

11. The device (25; 25B; 28) according to the preceding claim, wherein the second piece (250'; 280') has an elongate shape along a longitudinal axis (Y), said longitudinal axis is parallel to the second surface (S2) and to the fourth surface (S4), and the second surface and the fourth surface extend in cantilever fashion, on a same side of the second piece (250'; 280').

12. A variable area capacitor system for a microelectromechanical system (1), the system comprising a first variable area capacitor device (40') in accordance with any of claims 2 to 5, as well as a second variable area capacitor device (30') in accordance with claim 6 or 7, wherein the first electrode (41') of the first capacitor device (40') and the first electrode (31') of the second capacitor device (30') are integral with each other, and wherein the second electrode (42') of the first capacitor device (40') and the second electrode (32') of the second capacitor device (30') form part of a same mechanical piece, or of a same assembly of mechanical pieces, being movable relative to the first electrodes (31', 41') along said direction of displacement (X).

13. A microelectromechanical system type accelerometer, comprising:

- a variable area capacitor device according to one of claims 1 to 11, or a variable area capacitor system according to claim 12,
- a support, the first electrode being integral with the support, and
- a movable piece, being movable relative to the support along said direction of displacement, the second electrode being integral with said movable piece.

14. A microelectromechanical system type gyrometer (1), comprising:

- a variable-area capacitor device (30', 40', 50', 60') according to one of claims 1 to 11, or a variable-area capacitor system according to claim 12,
- a support (3'), the first electrode (31', 41', 51', 61') being integral with the support, and
- a movable frame (11', 21') or a test mass (10', 20'), being movable relative to the support (3') along said direction of displacement (X), the second electrode (32', 42', 52', 62') being integral with the movable frame (11', 21') or the test mass.

**Fig. 1**

**Fig. 2**

**Fig. 3**

**Fig. 4**

**Fig. 5**

**Fig. 6**

**Fig. 7**

**Fig. 8**

**Fig. 9**

Fig. 10

Fig. 11

Fig. 12

**Fig. 13**

**Fig. 14**

# Fig. 15

# Fig. 16

# Fig. 17

# Fig. 18

# Fig. 19

# Fig. 20

A-A

212

21

S1

A'

A'

**Fig. 21**

B2

S3

211    B3    B1

S2

213

212

21

S1    $\vec{n1}$    S2    $\vec{n3}$

**Fig. 22**

A'-A'

S3

211    213

# Fig. 23A

# Fig. 23B

239

230'

23B

234

$\vec{d}$

S1

240

C · · · · · C

Y
↑
⊙Z → X

S4

S2

# Fig. 24A

# Fig. 24B

# Fig. 25A

# Fig. 25B

# Fig. 26A

# Fig. 27A

# Fig. 26B

# Fig. 27B

# Fig. 28

# Fig. 29

# Fig. 30A

# Fig. 30B

# Fig. 31

EP 3 982 082 B1

# Fig. 32

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 8971012 B

- US 2013093437 A1